Europäisches Patentamt

European Patent Office

Office européen des brevets

(11) Publication number: **0 078 538**
**B1**

# EUROPEAN PATENT SPECIFICATION

(45) Date of publication of patent specification: **12.03.86**

(21) Application number: **82110097.1**

(22) Date of filing: **02.11.82**

(51) Int. Cl.⁴: **C 09 K 11/58,** C 09 K 11/61,
C 09 K 11/62, C 09 K 11/64,
H 01 J 29/18, H 01 J 29/20,
H 01 J 29/32

(54) **Blue emitting phosphor exhibiting long afterglow and electron excited display device using the same.**

(30) Priority: 02.11.81 JP 176170/81
11.11.81 JP 180721/81
12.11.81 JP 181624/81
01.12.81 JP 193247/81
29.12.81 JP 212278/81
07.01.82 JP 1133/82
29.01.82 JP 12866/82
29.01.82 JP 12867/82

(43) Date of publication of application:
**11.05.83 Bulletin 83/19**

(45) Publication of the grant of the patent:
**12.03.86 Bulletin 86/11**

(84) Designated Contracting States:
**DE GB NL**

(56) References cited:
**GB-A-1 153 754**
**GB-A-2 057 482**
**US-A-2 915 661**
**US-A-2 947 704**
**US-A-3 507 805**

(73) Proprietor: **KASEI OPTONIX, LTD.**
**2-7-18 Hamamatsu-cho Minato-ku**
**Tokyo (JP)**

(72) Inventor: **Hase, Takashi**
**579 Nakano**
**Ebina-shi Kanagawa-ken (JP)**
Inventor: **Yoshida, Hidemi**
**1-6-8 Sakawa**
**Odawara-shi Kanagawa-ken (JP)**

(74) Representative: **Kador . Klunker . Schmitt-Nilson**
**. Hirsch**
**Corneliusstrasse 15**
**D-8000 München 5 (DE)**

(56) References cited:

**CHEMICAL ABSTRACTS, vol. 91, no. 12,**
**September 1979, page 643, col. 2, no. 100981t,**
**Columbus Ohio (USA);**

**CHEMICAL ABSTRACTS, vol. 94, no. 1, January**
**1981, page 450, column 2, no. 10404q,**
**Columbus Ohio (USA);**

**CHEMICAL ABSTRACTS, vol. 89, no. 18,**
**October 1978, page 643, col. 1, no. 156473e,**
**Columbus Ohio (USA);**

Courier Press, Leamington Spa, England.

## Description

Background of the invention
Field of the invention

This invention relates to a zinc sulfide phosphor which emits blue light under excitation by an electron-beam and exhibits long afterglow, and to an electron excited fluorescent display device using the same.

Description of the prior art

As the application of electron excited fluorescent display devices such as cathode-ray tubes and low-velocity electron excited fluorescent display devices becomes wider, there has arisen an urgent need for a blue emitting phosphor which exhibits good afterglow characteristics.

For example, it is preferred to use a cathode-ray tube having a high resolution for terminal display devices of a computer or display devices of an air traffic control system in which fine characters and/or patterns are displayed. As is well known, the resolution of the cathode-ray tube can be effectively improved by reducing the frame frequency thereof. By reducing the frame frequency of the cathode-ray tube, which is about 55 Hz in case of the standard cathode-ray tube such as those for television screen, to about 30 Hz, the signal frequency band can be enlarged twice as wide as that of the standard cathode-ray tube, or the video frequency band can be narrowed to half of that of the standard cathode-ray tube, whereby the resolution can be improved. This is because the video frequency band of the driving circuit of the cathode-ray tube is determined depending on the product of the frame frequency and the signal frequency band.

The fluorescent screen of the cathode-ray tube having such a high resolution must be formed of phosphors which exhibits long afterglow characteristics. This is because if the fluorescent screen of the cathode-ray tube having a high resolution is formed of phosphors exhibiting short afterglow characteristics, flicker is apt to occur in the image on the screen due to low scanning speed. Generally, it is required for the phosphors forming the cathode-ray tube having such a high resolution that the afterglow time is longer than that of the phosphors forming the standard cathode-ray tube by several tens to several hundreds times. In this specification the afterglow time is defined as the time within which the emission intensity of the phosphor reduces to 10% of that under excitation by an electron beam having a current density of 1 $\mu A/cm^2$ after the excitation is interrupted, that is, the term "afterglow time" means 10% afterglow time in this specification.

As the long afterglow phosphors which can be employed in the high resolution cathode-ray tube, there have been known a manganese activated zinc silicate green emitting phosphor ($Zn_2SiO_4$:Mn), a manganese and arsenic activated zinc silicate green emitting phosphor ($Zn_2SiO_4$:Mn, As), a manganese activated zinc magnesium orthophosphate red emitting phosphor ($[(Zn, Mg)_3(PO_4)_2$:Mn]), a manganese activated zinc orthophosphate red emitting phosphor ($Zn_3(PO_4)_2$:Mn), a manganese activated magnesium silicate red emitting phosphor ($MgSiO_3$:Mn), a manganese and lead activated calcium silicate orange emitting phosphor ($CaSiO_3$:Mn, Pb), a manganese activated cadmium chlorophosphate orange emitting phosphor ($3Cd_3(PO_4)_2 \cdot CdCl_2$:Mn), a europium and dysprosium activated rare earth oxide red emitting phosphor ($Ln_2O_3$:Eu, Dy), wherein Ln is at least one element selected from the group consisting of Y, Gd, La and Lu), a manganese activated potassium magnesium fluoride orange emitting phosphor ($KM_gF_3$:Mn), and a manganese activated magnesium fluoride red emitting phosphor ($M_gF_2$:Mn), for example.

However there has been known no blue emitting phosphor which exhibits long afterglow.

As is well known, the fluorescent screen of a black-and-white cathode-ray tube is a white emitting fluorescent layer formed of a mixture of red, green and blue emitting phosphors, while the fluorescent screen of a color cathode-ray tube is formed of a plurality of regularly arranged light emitting element trios, each trio comprising red, green and blue emitting elements which are generally in the form of a dot or a stripe. The aforesaid long afterglow green emitting phosphors can be used as the green emitting component of the high resolution black-and-white or color cathode-ray tube, and aforesaid red or orange emitting phosphors can be used as the red emitting component of the same.

However, no blue emitting phosphor exhibiting long afterglow which can be used as the blue emitting component of the high resolution cathode-ray tube is known heretofore as described above. Therefore, as the blue emitting component for forming the fluorescent screen of the high resolution cathode-ray tube is conventionally used a so-called light blue emitting phosphor which is obtained by mixing a zinc sulfide short afterglow blue emitting phosphor (ZnS:Ag, X wherein X is at least one element selected from the group consisting of Cl, Br, I, F and Al) which includes silver as an activator and at least one element selected from the group consisting of Cl, Br, I, F and Al as a co-activator and has been practically used in cathode-ray tubes for black-and-white or color televisions, mixed with the long afterglow green and red or orange emitting phosphors in a specific mixing ratio, the light blue emitting phosphor causing human eyes to have an illusion that light blue afterglow occurs. (See Unexamined Japanese Patent Publication 52(1987)—144265.) However, since the afterglow time of the major component of the light blue emitting phosphor i.e., ZnS:Ag, X, is very short (one hundred and several tens microseconds to several hundreds microseconds), color drift occurs in its luminescent color after excitation is interrupted. For example, the fluorescent screen of the conventional high resolution black-and-white cathode-ray tube in which the light blue emitting phosphor and the long afterglow red and green emitting phosphors are used as the blue, red and green emitting components, respectively, emits white light under excitation but the color of light emitted therefrom after interruption of the excitation changes with the lapse of time to yellow which is the mixed color of the luminescent color of the long afterglow red emitting phosphor and that of the long afterglow green emitting phosphor. Further, since the light blue emitting phosphor is a mixture of phosphors having different luminescent colors, color shading is apt to occur in its luminescent color and its color purity is low.

Summary of the invention

In view of the foregoing observations and description, the primary object of the present invention is to provide a blue emitting phosphor which exhibits long afterglow and is particularly suitable for use in a high resolution cathode-ray tube, thereby promoting the spread of such high resolution cathode-ray tubes.

Another object of the present invention is to provide a long afterglow phosphor which can emit blue light of higher luminance.

Still another object of the present invention is to provide a long afterglow phosphor which can emit blue light of high color purity.

Still another object of the present invention is to provide an electron excited fluorescent display device having a fluorescent screen formed of phosphors exhibiting long afterglow.

Still another object of the present invention is to provide a black-and-white or color cathode-ray tube having a high resolution.

Still another object of the present invention is to provide a high resolution cathode-ray tube having a fluorescent screen free from color shading in the blue component of its afterglow.

Still another object of the present invention is to provide a high resolution cathode-ray tube having a fluorescent screen free from color drift in the blue component of its afterglow.

The inventors of the present invention conducted various investigations to elongate the afterglow time of the aforesaid ZnS:Ag, X phosphor which has been in wide use as a blue emitting phosphor, and as the result of the investigations it is found that a blue emitting phosphor of which 10% afterglow time is remarkedly longer than that of the known ZnS:Ag, X phosphor can be obtained by activating zinc sulfide with a proper amount of at least one of gallium and indium in addition to silver and X wherein X has the same significance as defined above. The present invention is based on this discovery in one aspect.

In another aspect the present invention is based on a discovery that a light blue emitting phosphor the luminance of which is higher than that of the known light blue emitting phosphor and the afterglow time of which is remarkably longer than the same can be obtained by activating zinc sulfide with a proper amount of at least one of gallium and indium in addition to a proper amount of silver and X and a small amount of at least one of copper and gold wherein X has the same significance as defined above.

In still another aspect the present invention is based on a discovery that the luminance of said long afterglow blue emitting phosphor is lowered as the activating amount of gallium and/or indium is increased and that the lowering of the luminance of the long afterglow blue emitting phosphor can be substantially refrained without significantly affecting the luminescent color and the afterglow characteristics by using as the host material green powder of zinc sulfide which is mixed with a large amount of sulfur during refining and by mixing a trace amount of sulfur in the resulting phosphor.

A superior display can be obtained by an electron excited fluorescent display device having a fluorescent screen including the long afterglow blue emitting phosphor according to the present invention as the blue emitting component. Particularly, a display with a very high resolution can be obtained by a high resolution cathode-ray tube having a fluorescent screen which includes at least one kind of the long afterglow blue emitting phosphors of the present invention of which afterglow time is specified as the major component of the blue emitting component, a red emitting phosphor of which afterglow time is specified and a green emitting phosphor of which afterglow time is specified.

In accordance with a first aspect of the present invention, there are provided zinc sulfide blue emitting phosphors exhibiting long afterglow which comprise zinc sulfide as the host material, silver as a first activator, at least one of gold and copper as a second activator, at least one of gallium and indium as a first co-activator and at least one of chlorine, bromine, iodine, fluorine and aluminum as a second activator, the amounts of the first and second activators and the first and second co-activators being $5 \times 10^{-4}$ to $10^{-1}\%$, 0 to $2 \times 10^{-2}\%$, $10^{-6}$ to $10^{-1}\%$ and $5 \times 10^{-6}$ to $5 \times 10^{-2}\%$ by weight on the basis of the weight of the zinc sulfide host material, respectively. Hereinafter, these phosphors will be referred to as "the phosphors without sulfur".

In accordance with a second aspect of the present invention, there are provided zinc sulfide blue emitting phosphors exhibiting long afterglow which comprises zinc sulfide as the host material, silver as a first activator, at least one of gold and copper as a second activator, at least one of gallium and indium as a first co-activator, at least one of chlorine, bromine, iodine fluorine and aluminium as a second co-activator and sulfur, the amounts of the first and second activators, the first and second co-activators and sulfur being $5 \times 10^{-4}$ to $10^{-1}\%$, 0 to $2 \times 10^{-2}\%$, $10^{-6}$ to $10^{-1}\%$, $5 \times 10^{-6}$ to $5 \times 10^{-2}\%$, and $10^{-5}$ to $8 \times 10^{-1}\%$ by weight on the basis of the weight of the zinc sulfide host material. Hereinafter, these phosphors will be referred to as phosphors with sulfur.

In accordance with a third aspect of the present invention, there is provided an electron excited fluorescent display device having at least one kind of the long afterglow blue emitting phosphors of the present invention as the blue emitting component. In one preferred embodiment of the present invention, the electron excited fluorescent display device is a high resolution cathode-ray tube having a fluorescent screen formed of

(A) a blue emitting component phosphor having the afterglow time of 5 to 150 ms and including at least one kind of the long afterglow blue emitting phosphors of the present invention as the major component,

(B) a green emitting component phosphor having the afterglow time of 5 to 150 ms and comprising a long afterglow green emitting phosphor the afterglow time of which is at least 5 ms, and

(C) a red emitting component phosphor having the afterglow time of 5 to 150 ms and comprising a long afterglow orange to red emitting phosphor the afterglow time of which is at least 5 ms.

The afterglow time of the zinc sulfide blue emitting phosphor of the present invention after interruption of excitation by an electron beam, an ultraviolet ray and the like is longer than that of the conventional ZnS:Ag, X blue emitting phosphor by several tens to several hundreds times. The main crystalline phase of the phosphors of the present invention forms either a cubic system or a hexagonal system depending on the firing temperature. The phosphors having a main crystal phase of a cubic system exhibit higher luminance than those having a main crystal phase of a hexagonal system. Further when at least one of gallium and indium is added by an amount within a range proper to make a phosphor exhibiting further higher luminance with high color purity, the former exhibits longer afterglow than the latter. Accordingly, among the phosphors of the present invention, phosphors having a main crystal line phase of a cubic system are more suitable for the high resolution cathode-ray tube than those having a main crystal line phase of a hexagonal system.

Brief description of the drawings

Figures 1 and 2 are graphs showing emission spectra of phosphors in accordance with several embodiments of the present invention together with the same of the known ZnS:Ag, X blue emitting phosphor.

Figure 3 is a graph showing the afterglow characteristics of phosphors in accordance with other embodiments of the present invention together with that of the known ZnS:Ag, X blue emitting phosphor,

Figure 4 is a graph showing the relation between the amount of gallium used as the first co-activator in the production of a phosphor of the present invention and the 10% afterglow time of the phosphor obtained,

Figure 5 is a graph showing the relation between the amount of indium used as the first co-activator in the production of a phosphor of the present invention and the 10% afterglow time of the phosphor obtained,

Figures 6 and 7 are graphs showing emission spectra of phosphors in accordance with other embodiments of the present invention together with the same of the known ZnS:Ag, X blue emitting phosphor,

Figures 8 and 9 are graphs showing the relation between the amount of gold or copper used as the second activator in the production of phosphors of the present invention and the relative luminance of emission of the phosphors obtained,

Figure 10 is a graph showing the relation between the amount of gallium used as the first co-activator in the production of ZnS:Ag, Ga, X phosphors with and without sulfur in accordance with different embodiments of the present invention and the luminance of emission of the phosphors obtained,

Figure 11 is a graph showing the relation between the amount of gallium used as the first co-activator in the production of ZnS:Ag, Ga, Cu X phosphors with and without sulfur in accordance with different embodiments of the present invention and the luminance of emission of the phosphors obtained,

Figure 12 is a graph showing the relation between the amount of indium used as the first co-activator in the production of ZnS:Ag, In, X phosphors with and without sulfur in accordance with different embodiments of the present invention and the luminance of emission of the phosphors obtained,

Figure 13 is a graph showing the relation between the amount of indium used as the first co-activator in the production of ZnS:Ag, In, Cu, X phosphors with and without sulfur in accordance with different embodiments of the present invention and the luminance of emission of phosphors obtained,

Figures 14 and 16 are graphs showing emission spectra of the fluorescent screen of a conventional high resolution cathode-ray tube and the fluorescent screens of those in accordance with different embodiments of the present invention under excitation by an electron beam, 15 ms after interruption of the excitation and 30 ms after interruption of the same,

Figures 15 and 17 are views in which emission chromaticities of the fluorescent screen of the conventional high resolution cathode-ray tube and the fluorescent screens of the high resolution cathode-ray tube in accordance with the embodiments of Figures 14 and 16, respectively, under excitation by the electron beam, 15 ms after interruption of the excitation and 30 ms after interruption of the same are plotted on a CIE chromaticity coordinates together with the chromaticities of the phosphors forming the screens.

Detailed description of the invention

When producing the long afterglow blue emitting phosphor of the present invention which does not contain sulfur, the following raw materials are used.

1) Green powder of zinc sulfide (as the host material)

2) Compounds of silver such as silver nitrate, silver sulfide and silver halide (as the material of the first activator)

3) At least one kind of compound selected from compounds of copper such as copper sulfate ($CuSO_4 \cdot 5H_2O$), and copper nitrate ($Cu(NO_3)_2 \cdot 6H_2O$), and compounds of gold such as gold chloride acid ($HAuCl_4 \cdot 4H_2O$) (as the material of the second activator)

4) At least one kind of compound selected from compounds of gallium such as gallium nitrate, gallium sulfide and gallium halide, and compounds of indium such as indium nitrate, indium sulfide and indium halide (as the material of the first co-activator)

5) At least one kind of compound selected from the group consisting of chloride, bromide, iodide and fluoride of alkaline metals (Na, K, Li, Rb, and Cs) and alkaline earth metals (Ca, Mg, Sr, Zn, Cd and Ba) and compounds of aluminium such as aluminium nitrate, aluminium sulfate, aluminium oxide and aluminium halide (as material of the second co-activator).

When producing the long afterglow blue emitting phosphor of the present invention which includes sulfur, a large amount of sulfur is mixed in the green powder of zinc sulfide during refining. The green powder of zinc sulfide mixed with the large amount of sulfur can be prepared adding ammonium sulfide to weak acidic, e.g., pH 6 to 4, aqueous solution of zinc sulfate maintaining the pH value of the aqueous solution, thereby precipitating zinc sulfide. The amount of sulfur existing in excess of stoichiometric amount in the green powder of zinc sulfide thus obtained depends on the pH value of said aqueous solution and increases as the pH value is lowered. Generally, green powder of zinc sulfide precipitated in aqueous solution with pH 6 to 4 includes sulfur in a weight of which is several tenths to several tens percent by weight on the basis of the weight of zinc sulfide in excess of the stoichiometric weight of sulfur. The excess sulfur is almost lost during firing process and only a part thereof remains in the phoshpor obtained. Accordingly, the amount of the excess sulfur contained in the green powder of zinc sulfide is selected taking into account the firing temperature and the firing time so that there remains a desired weight of sulfur which should be in the range of $10^{-5}\%$ to $8 \times 10^{-1}\%$ by weight on the basis of the weight of zinc sulfide host material in the phosphor obtained.

Said four (1 to 4) raw materials are used in a weight ratio which provides desired weight % of the first and second activators and the first co-activator with respect to the weight of zinc sulfide in the raw material of the host material which should be in the ranges of $5 \times 10^{-4}$ to $10^{-1}\%$, 0 to $2 \times 10^{-2}\%$, and $10^{-6}$ to $10^{-1}\%$ by weight on the basis of the weight of zinc sulfide, respectively. On the other hand, the raw material of the second co-activator must be used in a weight ratio which provides desired weight % of the second co-activator in the phosphor obtained which should be in the range of $5 \times 10^{-6}$ to $5 \times 10^{-2}\%$ on the basis of the weight of zinc sulfide. This is because halogen contained in the raw material of the second co-activator is almost lost during firing process and only a very small part thereof remains in the phosphor obtained, though aluminium in the raw material of the second co-activator all remains in the phosphor obtained. Accordingly, halide of the alkaline metals or alkaline earth metals must be used in an amount which includes several tens to several hundreds times as much halogen as the desired activating amount depending on the firing temperature and the like.

When halide is used as the raw materials of the first activator, the second activator, the first co-activator and/or aluminum, a part of the required amount of halogen is also provided by such raw materials. Halide of the alkaline metals or the alkaline earth metals acts as flux as well as the agent for providing halogen.

Said five raw materials are weighed out and sufficiently mixed by means of a ball mill, a mixer mill and the like to obtain a raw material mixture. When mixing the raw materials, the raw materials of the first and second activators and the first and second co-activators may be added in the form of solutions to the raw material of the zinc sulfide host material. In this case the raw material mixture obtained should be sufficiently dried.

When the amount of the second activator may be zero %, of course, the raw material of the second activator may be omitted.

Then the raw material mixture is placed in a heat resistant container such as a quartz crucible and a quartz tube and fired. The firing is performed in a sulfide atmosphere such as a hydrogen sulfide atmosphere, a sulfur vapor atmosphere and a carbon disulfide atmosphere. A proper firing temperature range is 600 to 1200°C. When the firing temperature is higher than 1050°C, phosphors having the main crystal line phase of a hexagonal system are obtained, while when the firing temperature is not higher than 1050°C phosphors having the main crystal line phase of a cubic system are obtained. In other words, the phosphors of the present invention have a phase transition point near 1050°C. As the blue emitting phosphor for the high resolution cathode-ray tube, those having the main crystalline phase of a cubic system are more preferred than those having the main crystalline phase of a hexagonal system as will be described hereinbelow. Therefore, the firing temperature is preferably in the range of 600 to 1050°C, and more preferably in the range of 800 to 1050°C. The firing time depends on the firing temperature, the amount of the raw material mixture in the container, but a proper time is 0.5 to 7 hours in the aforesaid temperature range. After the firing, the fired product is subjected to treatments generally employed in the production of phosphor such as washing, drying and sieving to provide the desired phosphor.

Both the phosphors with sulfur and the phosphors without sulfur of the present invention can be produced by the process described above. The phosphors without sulfur emits blue light of high luminance equivalent to that of the conventional ZnS:Ag, X phosphor under excitation by an electron beam, ultraviolet rays and the like. However, the 10% afterglow of the former is several tens to several hundreds times longer than that of the latter depending on the activating amount of the first co-activator, gallium and/or indium. The afterglow characteristics of the phosphor without sulfur changes depending on the activating amount of the first co-activator under the presence of the second co-activator, and at the same time the activating amount of the first co-activator influences the luminace of emission and the color purity. The luminance of emission and the color purity of the phosphors without sulfur is lowered as the activating amount of the first co-activator increases. The luminance of emission of the phosphors with sulfur is several to 10% higher than that of the phosphors without sulfur. Further, the luminance of emission of the phosphor having a main crystalline phase of a cubic system is 1.3 times to twice higher than the same of the phosphor having a main crystalline phase of a hexagonal system.

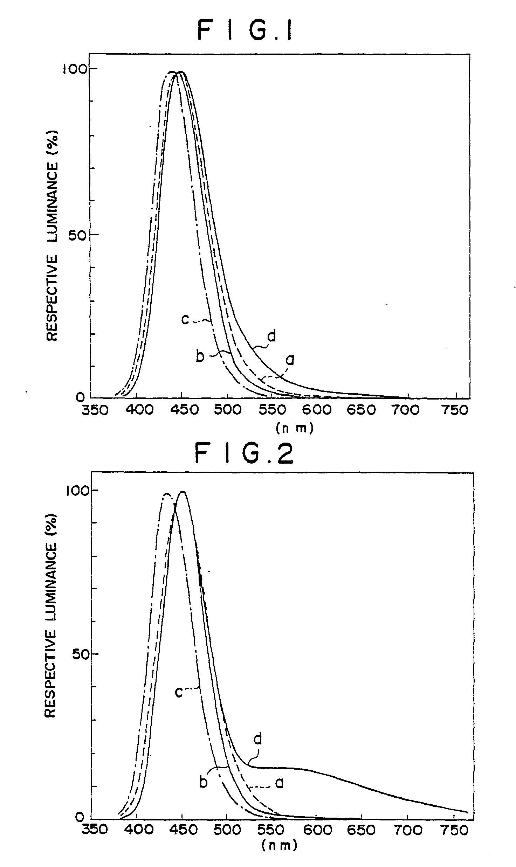

Figures 1 to 15 show various characteristics of phosphors in accordance with various embodiments of the present invention compared with those of the conventional ZnS:Ag, X phosphor. The compositions of the phosphors other than zinc sulfide are given in the following table. The amount of each activator, co-activator or sulfur will be given by weight % on the basis of the weight of zinc sulfide, hereinbelow.

TABLE

| Phosphor | Activator | | Co-activator | | Sulfur % | Main crystalline phase |
| | 1st % | 2nd % | 1st % | 2nd % | | |
|---|---|---|---|---|---|---|
| #1 (conventional) | Ag $10^{-2}$ | — | — | Cl $10^{-4}$ | — | Cubic |
| #2 | Ag $10^{-2}$ | — | Ga $10^{-2}$ | Cl $10^{-4}$ | — | Cubic |
| #3 | Ag $10^{-2}$ | — | Ga $10^{-2}$ | Cl $10^{-4}$ | — | Hexagonal |
| #4 | Ag $10^{-2}$ | — | Ga $10^{-1}$ | Cl $10^{-4}$ | — | Cubic |
| #5 | Ag $10^{-2}$ | — | In $10^{-2}$ | Cl $10^{-4}$ | — | Cubic |
| #6 | Ag $10^{-2}$ | — | In $10^{-2}$ | Cl $10^{-4}$ | — | Hexagonal |
| #7 | Ag $10^{-2}$ | — | In $2\times10^{-2}$ | Cl $10^{-4}$ | — | Cubic |
| #8 | Ag $10^{-2}$ | — | In $2\times10^{-3}$ | Cl $10^{-4}$ | — | Cubic |
| #9 | Ag $10^{-2}$ | Cu $2\times10^{-4}$ | Ga $10^{-2}$ | Cl $10^{-4}$ | — | Cubic |
| #10 | Ag $10^{-2}$ | Au $1.5\times10^{-3}$ | Ga $10^{-2}$ | Cl $10^{-4}$ | — | Cubic |
| #11 | Ag $10^{-2}$ | Cu $2\times10^{-4}$ | In $10^{-2}$ | Cl $10^{-4}$ | — | Cubic |
| #12 | Ag $10^{-2}$ | Au $1.5\times10^{-3}$ | In $10^{-2}$ | Cl $10^{-4}$ | — | Cubic |

Figure 1 shows emission spectra of a conventional ZnS:Ag, Cl phosphor having a main crystalline phase of a cubic system (Phosphor #1) and ZnS:Ag, Ga, Cl Phosphors in accordance with the present inventin (phosphors #2 to #4). The amounts of the Ag, Ga and Cl in the phosphors #1 to #4 are given in the above table and phosphor #3 has a main crystalline phase of a hexagonal system, the other phosphors having a main crystalline phase of a cubic system. The activating amounts of Ag and Cl in the phosphors #2 to #4 are equal to those in the conventional phosphor (#1). In Figure 1 lines a to d show emission spectra of the phosphors #1 to #4, respectively.

As can be seen from Figure 1, the phosphors #2 to #4 in accordance with the present invention emit blue light like the conventional phosphor #1. Further, in the phosphors of the present invention, as the amount of Ga is increased, the half-width of the emission spectrum is enlarged and the color purity is lowered, as can be seen by comparing the lines b and d with each other. As can be seen by comparing the lines a and b, the half-width of the emission spectrum of the phosphor #2 activated by $10^{-2}$% Ga is narrower than the same of the conventional phosphor #1, and accordingly the intensity of luminescent color of the former is higher than the latter. Further as can be seen by comparing the lines b and c with each other the emission spectrum of the phosphor #2 having the main crystalline phase of a cubic system slightly shifts toward the longer wave length side with respect to the same of the phosphor #3 having the

6

main crystalline phase of a hexagonal system. Thus, it is clear that among the phosphors of the present invention those having the main crystalline phase of a cubic system are more suitable for the high resolution power cathode-ray tube than those having the main crystalline phase of a hexagonal system.

Figure 2 shows emission spectra of the conventional ZnS:Ag, Cl phosphor having a main crystalline phase of a cubic system (phosphor #1) and ZnS:Ag, In, Cl phosphors in accordance with the present invention (phosphors #5 to #7). The amounts of Ag, In and Cl in the phosphors #5 to #7 are given in the above table and phosphor #6 has a main crystalline phase of a hexagonal system, the other phosphors having a main crystalline phase of a cubic system. The activating amounts of Ag and Cl in the phosphors #5 to #7 are equal to those in the conventional phosphor (#1). In Figure 1 lines $a$ to $d$ show emission spectra of the phosphors #5 to #7, respectively.

As can be seen from Figure 2, the phosphors #5 to #7 in accordance with the present invention emit blue light like the conventional phosphor #1. Further, in the phosphors of the present invention, as the amount of In is increased, the half-width of the emission spectrum is enlarged and the color purity is lowered, as can be seen by comparing the lines $b$ and $d$ with each other. As can be seen by comparing the lines $a$ and $b$, the half-width of the emission spectrum of the phosphor #5 activated by $10^{-2}$% In is narrower than the same of the conventional phosphor #1, and accordingly the color purity of the former is higher than the latter. Further as can be seen by comparing the lines $b$ and $c$ with each other, the emission spectrum of the phosphor #5 having the main crystalline phase of a cubic system slightly shifts toward the longer wave length side with respect to the same of the phosphor #6 having the main crystalline phase of a hexagonal system.

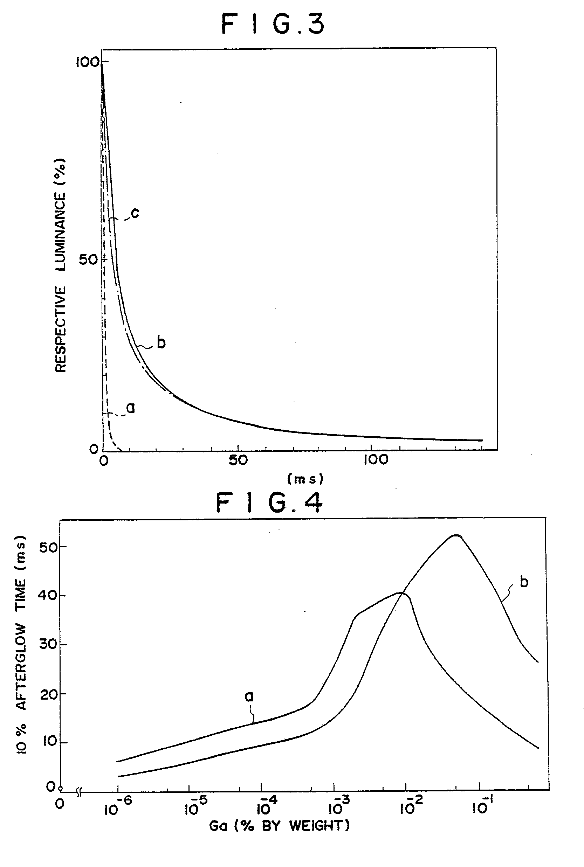

Figure 3 shows the afterglow characteristics of phosphors in accordance with the present invention and the conventional ZnS:Ag, X phosphor. In Figure 3, line $a$ shows the afterglow characteristics of said conventional phosphor #1, line $b$ shows the same of said phosphor #2 in accordance with the present invention and line $c$ shows the same of a ZnS:Ag, In, Cl phosphor #8 in accordance with the present invention. The activating amounts of Ag and Cl of the phosphors #2 and #8 are equal to those of the phosphor #1. However, the phosphor #2 is further activated with $10^{-2}$% Ga, and the phosphor #8 is further activated with $2\times10^{-3}$% In as shown in the above table. These three phosphors #1, #2 and #8 all have a main crystalline phase of a cubic system.

As can be seen from Figure 3, the afterglow time of either the phosphors #2 or #8 is remarkably longer than that of the conventional phosphor #1. That is, the afterglow time of the conventional phosphor #1 is about 150 µsec, while those of the phosphor #2 and #8 are about 40 ms, the latter being more than two hundreds and fifty times longer than the former.

Figure 4 shows the relation between the activating amount of Ga and the 10% afterglow time in ZnS:Ag, Ga, Cl phosphors of the present invention. In Figure 4, line $a$ shows said relation in a phosphor which contains therein $10^{-2}$% Ag and $10^{-4}$% Cl and has a main crystalline phase of a cubic system, while line $b$ shows the relation in a phosphor which contains therein equal amounts of Ag and Cl to the above-mentioned values but has a main crystalline phase of a hexagonal system rather than a cubic system. In Figure 4, the circle on the ordinate indicates the afterglow time of the conventional phosphor #1, i.e., about 150 µsec. The phosphor #1 contains the same amounts of Ag and Cl as the above-mentioned values.

As can be seen from Figure 4, the 10% afterglow time of the phosphors of the present invention activated with $10^{-6}$% to $5\times10^{-1}$% Ga is several tens to several hundred times longer than that of the conventional ZnS:Ag, X phosphor irrespective of its main crystalline phase. Particularly, the phosphors of the present invention activated with $5\times10^{-4}$ to $10^{-1}$% Ga exhibit very long afterglow. However, when the amount of Ga is increased by a large amount, the luminance of emission and the color purity are lowered as described above. Accordingly, it is preferred that the activating amount of Ga be in the range of $5\times10^{-6}$ to $10^{-3}$%. As is clear from Figure 4, the 10% afterglow time of the phosphors of the present invention in which the activating amount of Ga is in this range is about 5 to 30 ms, which is sufficient for use in the high resolution cathode-ray tube.

As described before, among the phosphors of the present invention, those having a main crystalline phase of a cubic system exhibit higher luminance of emission than those having a main crystalline phase of a hexagonal system. Further, the former exhibits longer 10% afterglow time than the latter when the activating amount of Ga is in said preferred range as is clear from Figure 4. Therefore, among the phosphors of the present invention, those having a main crystalline phase of a cubic system are more preferred for use in the high resolution cathode-ray tube than those having a main crystalline system of a hexagonal system. Particularly, those which have a main crystalline phase of a cubic system and at the same time are activated with $5\times10^{-6}$ to $10^{-3}$% Ga are most preferred for use in the high resolution cathode-ray tube.

Although, Figure 4 is related to the phosphors of the present invention containing therein Cl as the second co-activator, it has been confirmed that the relation between the amount of activating Ga and the 10% afterglow time in case of phoshpors having the second co-activator other than Cl is similar to that shown in Figure 4.

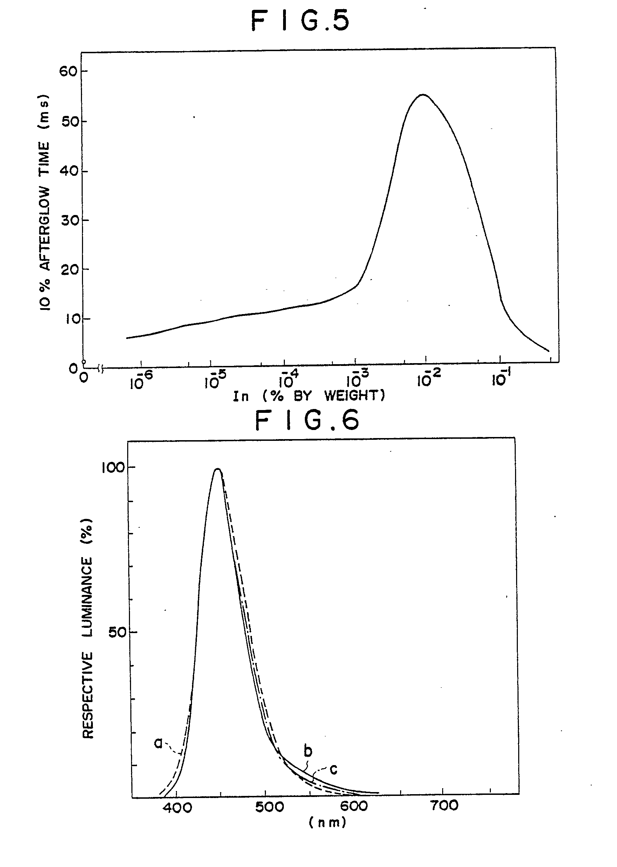

Figure 5 shows the relation between the activating amount of In and the 10% afterglow time in a ZnS:Ag, In, Cl phosphor of the present invention which contains therein $10^{-2}$% Ag and $10^{-4}$% Cl and has a main crystalline phase of a cubic system. In Figure 5, the circle on the ordinate indicates the afterglow time of the conventional phosphor #1, i.e., about 150 μsec. The phosphor #1 contains the same amounts of Ag and Cl as the above-mentioned values.

As can be seen from Figure 5, the 10% afterglow time of the phosphor of the present invention activated with $10^{-6}$ to $10^{-1}$% In is several tens to several hundreds times longer than that of the conventional ZnS:Ag, X phosphor. Particularly, the phosphor of the present invention activated with $5\times10^{-4}$ to $10^{-1}$% In exhibit very long afterglow. However, when the amount of In is increased by a large amount (to $2\times10^{-2}$% or more), the color purity is lowered as described above. Further as the 10% afterglow time is extended, the luminance of emission is lowered. Accordingly, the activating amount of In is preferably in the range of $5\times10^{-6}$ to $10^{-2}$% and more preferably in the range of $5\times10^{-6}$ to $10^{-3}$%. As is clear from Figure 5, the 10% afterglow time of the phosphors of the present invention in which the activating amount of In is in this range is about 5 to 55 ms, which is sufficient for use in the high resolutin cathode-ray tube.

Although, the graph of Figure 5 is related to the phosphor of the present invention having a main crystalline phase of a cubic system, it has been confirmed that the relation between the amount of activating In and the 10% afterglow in case of phosphors having a main crystalline phase of a hexagonal system is similar to that shown in Figure 5. That is, the phosphors of the present invention having a main crystalline phase of a hexagonal system and activated with $10^{-6}$ to $10^{-1}$% In exhibit 10% afterglow time several tens to several hundreds times longer than that of the conventional ZnS:Ag, X phosphor. Particularly, when activated with $5\times10^{-4}$ to $10^{-1}$% In, the phosphors exhibit very long 10% afterglow time. However, when the amount of In is in said preferred range ($5\times10^{-6}$ to $10^{-2}$%), the 10% afterglow time of the phosphors having a main crystalline phase of a hexagonal system is shorter than that of those having a main crystalline phase of a cubic system.

As described before, among the phosphors of the present invention, those having a main crystalline phase of a cubic system exhibit higher luminance of emission than those having a main crystalline phase of a hexagonal system. Further, the former exhibits longer 10% afterglow time than the latter when the activating amount of In is in said preferred range.

Therefore, among the phosphors of the present invention, those having a main crystalline phase of a cubic system are more preferred for use in the high resolution cathode-ray tube than those having a main crystalline system of a hexagonal system. Particularly, those which have a main crystalline phase of a cubic system and at the same time are activated with $5\times10^{-6}$ to $10^{-2}$% In are most preferred for use in the high resolution cathode-ray tube.

Although, Figure 5 is related to the phosphors of the present invention containing therein Cl as the second co-activator, it has been confirmed that the relation between the amount of activating In and the 10% afterglow time in case of phosphors having the second co-activator other than Cl is similar to that shown in Figure 5.

Figure 6 shows emission spectra of the conventional ZnS:Ag, Cl phosphor having a main crystalline phase of a cubic system (phosphor #1) and phosphors in accordance with the present invention (phosphors #9 and #10). The compositions of the phosphors #1, #9 and #10 are given in the above table and the #1, #9 and #10 all have a main crystalline phase of a cubic system. The activating amounts of Ag and Cl in the phosphors #9 and #10 are equal to those in the conventional phosphor (#1), but the phosphor #9 is further activated with $10^{-2}$% Ga and $2\times10^{-4}$% Cu, and the phosphor #10 is further activated with $10^{-2}$% Ga and $1.5\times10^{-3}$% Au. In Figure 6 lines a to c show emission spectra of the phosphors #1, #9 and #10, respectively.

As can be seen from Figure 6, the phosphors #9 (line b) and #10 (line c) in accordance with the present invention emit blue light like the conventional phosphor #1 (line a). Though, the emission spectrum of a phosphor of this type having a main crystalline phase of a hexagonal system is not shown the emission spectrum of the phosphors having a main crystalline phase of a cubic system slightly shifts toward the longer wave length side with respect to the same of the phosphor having a main crystalline phase of a hexagonal system whereby the former exhibits higher color purity than that of the latter.

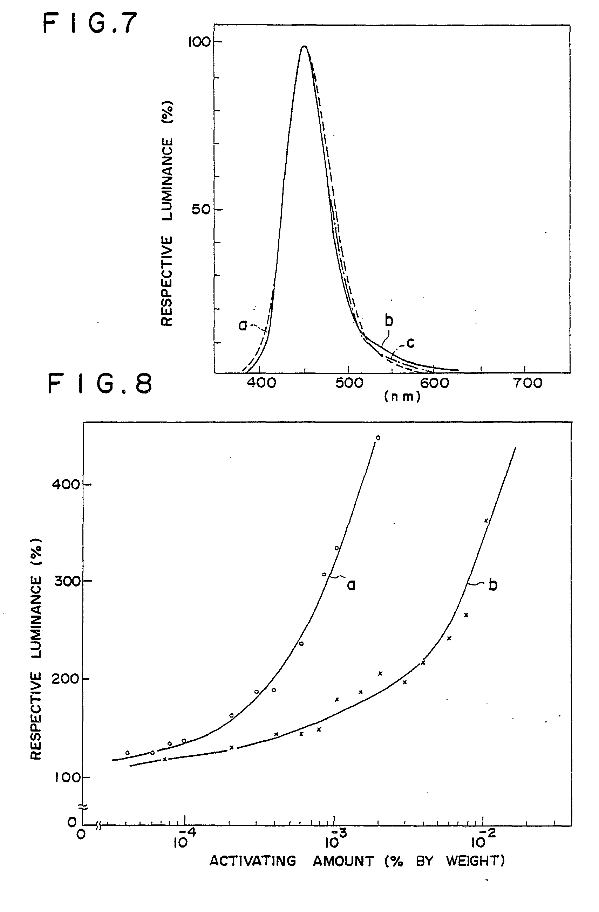

Figure 7 shows emission spectra of the conventional ZnS:Ag, Cl phosphor #1 and phosphors in accordance with the present invention (phosphor #11 and #12). The composition of the phosphors #1, #11 and #12 are given in the above table and the phosphor #1, #11 and #12 all have a main crystalline phase of a cubic system. The compositions of the phosphors #11 and #12 are equal to those of the phosphors #9 and #10 except that In is used as the first co-activator instead of Ga.

As can be seen from Figure 7, the phosphors #11 (line b) and #12 (line c) in accordance with the present invention emit blue light like the conventional phosphor #1 (line a). Though, the emission spectrum of a phosphor of this type having a main crystalline phase of a cubic system is not shown, the emission spectrum of the phosphor having a main crystalline phase of a cubic system slightly shifts toward the longer wave length side with respect to the same of the phosphor having a main crystalline phase of a hexagonal system, whereby the former exhibits higher color purity than that of the latter.

Figure 8 shows the relation between the amount of the second activator and the relative luminance of the phosphor obtained. In Figure 8, line a shows the relation between the amount of Cu (second activator) and the relative luminance of a ZnS:Ag, Ga, Cu, Cl phosphor in which the amounts of Ag, Ga and Cl are $10^{-2}$%, $2\times10^{-3}$% and $10^{-4}$%, respectively, and which has a main crystalline phase of a cubic system, while line b shows the relation between the amount of Au (second activator) and the relative luminance of a ZnS:Ag, Ga, Au, Cl phosphor in which the amounts of Ag, Ga and Cl are equal to the above values, and which has main crystalline phase of a cubic system. In Figure 8, the luminance of ZnS:Ag, Ga, Cl phosphor which is activated with the same amounts of Ag, Ga and Cl as the above values but is not activated with the second activator is defined to be 100%.

As can be seen from Figure 8, the luminance of emission of the ZnS:Ag, Ga, Cl phosphor is highly improved when further activated with Cu and/or Au. However, when the amount of Cu and/or Au is excessive, the color purity is lowered, and the phosphor comes to emit white light. Therefore, the amount of Au and/or Cu should not be more than $2 \times 10^{-2}$%. Further, when only one of Cu and Au is used as the second activator, the particularly preferred range of the amount of Cu and Au are $5-10^{-5}$ to $8 \times 10^{-4}$% and $5 \times 10^{-4}$ to $8 \times 10^{-3}$%, respectively.

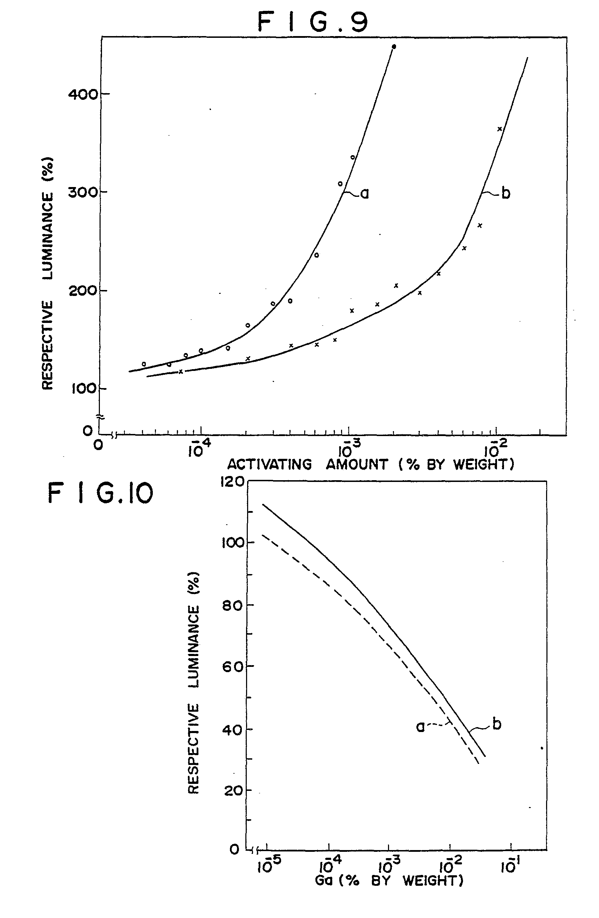

Figure 9 shows the relation between the amount of the second activator and the relative luminance of the phosphor obtained. In Figure 9, line $a$ shows the relation between the amount of Cu (second activator) and the relative luminance of a ZnS:Ag, In, Cu, Cl phosphor in which the amounts of Ag, In and Cl are $10^{-2}$%, $2 \times 10^{-3}$% and $10^{-4}$%, respectively, and which has a main crystalline phase of a cubic system, while line $b$ shows the relation between the amount of Au (second activator) and the relative luminance of a ZnS:Ag, In, Au, Cl phosphor in which the amounts of Ag, Ga and Cl are equal to the above values, and which has main crystalline phase of a cubic system. In Figure 9, the luminance of ZnS:Ag, In, Cl phosphor which is activated with the same amounts of Ag, In and Cl as the above values but is not activated with the second activator is defined to be 100%.

As can be seen from Figure 9, the luminance of emission of the ZnS:Ag, In, Cl phosphor is highly improved when further activated with Cu and/or Au. However, when the amount of Cu and/or Au is excessive, the color purity is lowered, and the phosphor comes to emit white light. Therefore, the amount of Au and/or Cu should not be more than $2 \times 10^{-2}$%. Further, when only one of Cu and Au is used as the second activator, the particularly preferred range of the amount of Cu and Au are $5 \times 10^{-5}$ to $8 \times 10^{-4}$% and $5 \times 10^{-4}$ to $8 \times 10^{-3}$%, respectively.

Figures 10 to 13 are graphs for illustrating the influence of sulfur on the luminance of emission of phosphors.

In Figure 10 line $a$ shows the relation between the amount of Ga and the relative luminance of emission of ZnS:Ag, Ga, Cl without sulfur in which the amounts Ag and Cl are $10^{-2}$% and $10^{-4}$%, respectively, while line $b$ shows the relation between the amount of Ga and the relative luminance of emission of a ZnS:Ag, Ga, Cl phosphor which contains therein $10^{-4}$% sulfur and in which the amounts of Ag and Cl are equal to those of the phosphor without sulfur. Both the phosphors with and without sulfur have a main crystalline phase of a cubic system.

As can be seen from Figure 10, the luminance of emission is lowered as the amount of Ga is increased in either of phosphors with and without sulfur. However, the luminance of emission of the phosphor with sulfur is higher than the phosphor without sulfur. That is, the trace amount of sulfur suppresses the adverse influence of Ga on the luminance of emission. This effect of sulfur is particularly significant when the amount of sulfur is in the range of $5 \times 10^{-5}$ to $10^{-3}$%. Since sulfur hardly influences the afterglow characteristics and the color purity, when taking into account the luminance of emission, the ZnS:Ag, Ga, Cl phosphors with sulfur is more suitable than those without sulfur for use in the high resolution cathode-ray tube.

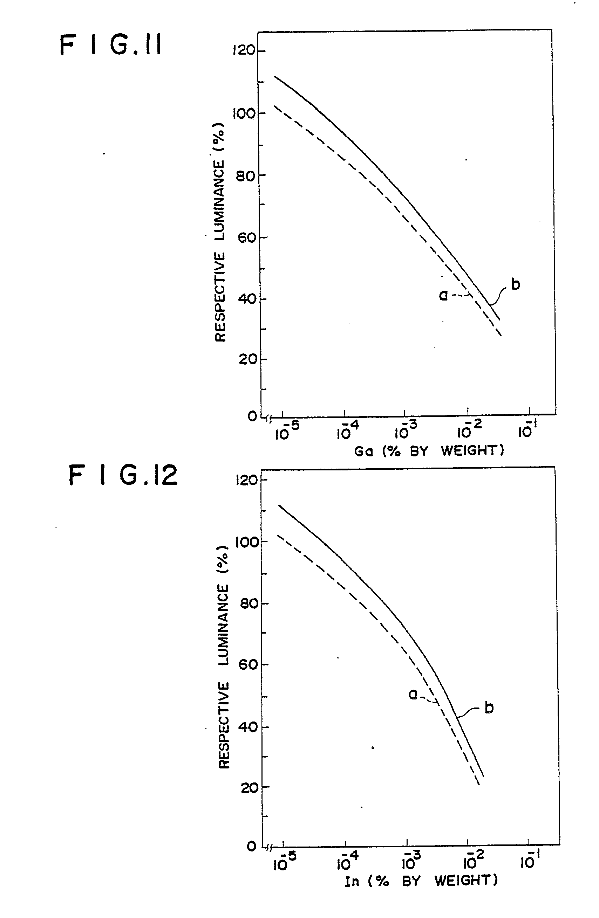

In Figure 11 line $a$ shows the relation between the amount of Ga and the relative luminance of emission of a ZnS:Ag, Ga, Cu, Cl without sulfur in which the amounts Ag, Cu and Cl are $10^{-2}$%, $2 \times 10^{-4}$% and $10^{-4}$%, respectively, while line $b$ shows the relation between the amount of Ga and the relative luminance of emission of a ZnS:Ag, Ga, Cu, Cl phosphor which contains therein $10^{-4}$% sulfur and in which the amounts of Ag, Cu and Cl are equal to those of the phosphor without sulfur. Both the phosphors with and without sulfur have a main crystalline phase of a cubic system.

As can be seen from Figure 11, the luminance of emission is lowered as the amount of Ga is increased in either of phosphors with and without sulfur. However, the luminance of emission of the phosphor with sulfur is higher than the phosphor without sulfur. That is, the trace amount of sulfur suppresses the adverse influence of Ga on the luminance of emission. This effect of sulfur is particularly significant when the amount of sulfur is in the range of $5 \times 10^{-5}$ to $10^{-3}$%. Since sulfur hardly influences the afterglow characteristics and the color purity, when taking into account the luminance of emission, the ZnS:Ag, Ga, Cl phosphors with sulfur is more suitable than those without sulfur for use in the high resolution cathode-ray tube.

In Figure 12 line $a$ shows the relation between the amount of In and the relative luminance of emission of a ZnS:Ag, In, Cl without sulfur in which the amounts Ag and Cl are $10^{-2}$% and $10^{-4}$%, respectively, while line $b$ shows the relation between the amount of In and the relative luminance of emission of a ZnS:Ag, In, Cl phosphor which contains therein $10^{-4}$% sulfur and in which the amounts of Ag and Cl are equal to those of the phosphor without sulfur. Both the phosphors with and without sulfur have a main crystalline phase of a cubic system.

As can be seen from Figure 12, the luminance of emission is lowered as the amount of In is increased in either of phosphors with and without sulfur. However, the luminance of emission of the phosphor with sulfur is higher than the phosphor without sulfur. That is, the trace amount of sulfur suppresses the adverse influence of Ga on the luminance of emission. This effect of sulfur is particularly significant when the amount of sulfur is in the range of $5\times10^{-5}$ to $10^{-3}\%$. Since sulfur hardly influences the afterglow characteristics and the color purity, when taking into account the luminance of emission, the ZnS:Ag, Ga, Cl phosphors with sulfur is more suitable than those without sulfur for use in the high resolution cathode-ray tube.

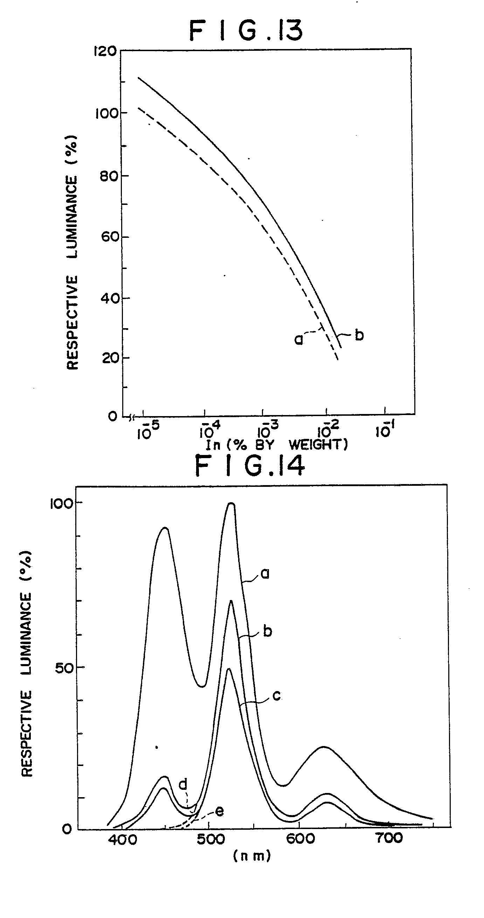

In Figure 13 line *a* shows the relation between the amount of In and the relative luminance of emission of a ZnS:Ag, In, Cu, Cl without sulfur in which the amounts Ag, Cu and Cl are $10^{-2}\%$, $2\times10^{-4}\%$ and $10^{-4}\%$, respectively, while line *b* shows the relation between the amount of In and the relative luminance of emission of a ZnS:Ag, In, Cu, Cl phosphor which contains therein $10^{-4}\%$ sulfur and in which the amounts of Ag, Cu and Cl are equal to those of the phosphor without sulfur. Both the phosphors with and without sulfur have a main crystalline phase of a cubic system.

As can be seen from Figure 13, the luminance of emission is lowered as the amount of In is increased in either of phosphors with and without sulfur. However, the luminance of emission of the phosphor with sulfur is higher than the phosphor without sulfur. That is, the trace amount of sulfur suppresses the adverse influence of In on the luminance of emission. This effect of sulfur is particularly significant when the amount of sulfur is in the range of $5\times10^{-5}$ to $10^{-3}\%$. Since sulfur hardly influences the afterglow characteristics and the color purity, when taking into account the luminance of emission, the ZnS:Ag, In, Cu phosphors with sulfur is more suitable than those without sulfur for use in the high resolution cathode-ray tube.

The electron excited fluorescent display device of the present invention is characterized in that its fluorescent screen has the long afterglow blue emitting phosphor of the present invention as the major component of the blue emitting component. In the electron excited fluorescent display device of the present invention, high resolution cathode-ray tubes such as color cathode-ray tubes, black-and-white cathode-ray tubes and monochromatic display tube and low-velocity electron excited fluorescent display tubes are included.

Now, by way of example, a high resolution cathode-ray tube will be described in detail.

In the high resolution cathode-ray tube of the present invention, the blue emitting component phosphor of the fluorescent screen thereof includes at least one kind of the phosphors of the present invention as the major component.

The afterglow time of the phosphor of the present invention changes in the range of 5 to 300 ms depending on the activating amount of the first co-activator (Ga and/or In) and the current density of the exciting electron beam. It has been found that when the afterglow time of the phosphors employed in the high resolution cathode-ray tube is not longer than 5 ms, flicker appears in an image on the screen, while when the afterglow time of the same is not shorter than 150 ms, after-images appear. Therefore, the afterglow time of the phosphors employed in the high resolution cathode-ray tube of the present invention should be in the range of 5 to 150 ms though depending on the current density of the exciting electron beam.

The blue emitting component phosphor of the fluorescent screen of the high resolution cathode-ray tube of the present invention may solely consist of at least one kind of the phosphor of the present invention, or may consist of at least one kind of phosphors of the present invention and a short afterglow time blue emitting phosphor mixed therein in a proper mixing ratio to control the afterglow characteristics and/or the luminance of emission.

The afterglow time of the phosphors of the present invention is 5 to 80 ms under excitation by an electron beam having the current density of 1 $\mu A/cm^2$. However, the afterglow time of the phosphors of the present invention can be extended up to about 300 ms by reducing the current density of the exciting electron beam. In such a case at least one kind of short afterglow blue emitting phosphor is mixed in the phosphor of the present invention in a proper mixing ratio to produce the blue emitting component phosphor the afterglow time of which is in the range of 5 to 150 ms. As the shortglow time blue emitting phosphor to be mixed in the phosphor of the present invention, said conventional ZnS:Ag, X phosphors can be used.

In the blue emitting component phosphor of the fluorescent screen of the cathode-ray tube of the present invention, there is hardly any possibility of occurrence of color drift after interruption of the excitation since it solely consists of the blue emitting phosphor of the present invention or of the phosphor of the present invention and short afterglow phosphor emitting light of color similar to the color of the light emitted from the phosphor of the present invention. Further the blue emitting component phosphor according to the present invention is free from color shading even if it is produced by mixing the short afterglow blue emitting phosphor in the phosphor of the present invention unlike the conventional light blue phosphor which is produced by mixing phosphors having different luminescent colors. Further, the phosphors of the present invention emit blue light the color purity of which is significantly higher than that of the conventional light blue phosphor. Therefore, the blue emitting component phosphor including the long afterglow time blue emitting phosphor of the present invention at least as the major component thereof emits blue light the color purity of which is significantly higher than that of the conventional light blue phosphor.

The afterglow time of the green emitting component phosphor forming the fluorescent screen of the cathode-ray tube of the present invention should also be in the range of 5 to 150 ms. Therefore, the green emitting component phosphor are used those the afterglow time of which is longer than 5 ms. For example, the afterglow time of known $ZnSiO_4$:Mn phosphors and known $ZnSiO_4$:Mn, As phosphors is not shorter than 5 ms. Again, the green emitting component phosphor may be produced by mixing short afterglow green emitting phosphor in long afterglow green emitting phosphor in a proper mixing ratio to produce the green emitting component phosphor having the afterglow time of 5 to 150 ms. As the short afterglow time green emitting phosphor may be used known copper and aluminium activated zinc sulfide phosphor (ZnS:Cu, Al), copper, gold and aluminium activated zinc sulfide phosphor (ZnS:Cu, Au, Al), silver activated zinc cadmium sulfide phosphor [(Zn, Cd)S:Ag], copper activated zinc cadmium sulfide phosphor [(Zn, Cd)S:Cu], copper and chroline activated zinc sulfide phosphor (ZnS:Cu, Cl), copper and aluminium activated zinc cadmium sulfide phosphor [(Zn, Cd):Cu, Al], silver and aluminium activated zinc cadmium sulfide phosphor [(Zn, Cd)S:Ag, Al], and terbium activated rare earth oxysulfide phosphore ($Ln_2O_2S$:Tb wherein Ln is at least one element selected from the group consisting of Y, Gd, La and Lu), for example.

The afterglow time of the red emitting component phosphor forming the fluorescent screen of the cathode-ray tube of the present invention should also be in the range of 5 to 150 ms. Therefore, the red emitting component phosphor is formed of orange to red emitting phosphors the afterglow time of which is longer than 5 ms. For example, the afterglow time of known $(Zn, Mg)_3(PO_4)_2$:Mn phosphors, $Zn_3(PO_4)_2$:Mn phosphors, $MgSiO_3$:Mn phosphors, $CaSiO_3$:Mn, Pb phosphors, $3Cd_3(PO_4)_2 \cdot CdCl_2$:Mn phosphors, $Ln_2O_3$:Eu, Dy phosphors (Ln is at least one element selected from Y, Gd, La and Lu), $KMgF_3$:Mn phosphors, $MgF_2$:Mn phosphors is longer than 5 ms.

Again, the red emitting component phosphor may be produced by mixing short afterglow orange to red emitting phosphor in long afterglow orange to red emitting phosphor in a proper mixing ratio to produce the red emitting component phosphor having the afterglow time of 5 to 150 ms. As the short afterglow time orange to red phosphor may be used europium activated rare earth oxysulfide phosphors ($Ln_2O_2S$:Eu, wherein Ln has the same significance as described above), europium activated rare earth vanadate phosphors ($LnVO_4$:Eu wherein Ln has the same significance as defined above), gold and aluminium activated zinc sulfide phosphors and the like.

In case of black-and-white type high resolution cathode-ray tube, its fluorescent screen is formed of a layer of white emitting phosphor which is obtained by mixing the blue, red and green emitting component phosphors with each other in a proper mixing ratio. The mixed phosphor may be applied to the surface of a face plate using various methods commonly and widely used in making fluorescent screens, e.g., sedimentation method, or rotary coating method. Generally, a layer of metal (metal back) such as aluminium is deposited on the rear face (the incident face of the electron beam) in order to prevent charge-up upon excitation. The mechanical arrangement of the black-and-white cathode-ray tube of the present invention is the same as that of conventional one. Therefore, it will not be described in detail here.

As described above, the blue emitting component phosphor employed in the fluorescent screen of the high resolution cathode-ray tube of the present invention exhibits sufficiently long afterglow time and is substantially free from color drift after interruption of the excitation. Therefore, the fluorescent screen emits white light even after the interruption of the excitation unlike the conventional fluorescent screen using the light blue phosphor as the blue emitting component phosphor.

When the high resolution cathode-ray tube of the present invention is in the form of a color cathode-ray tube, its fluorescent screen is formed of a plurality of regularly arranged light emitting element trios, each trio being formed of a blue light emitting element, a green light emitting element and red light emitting element. Each light emitting element is in the form of a dot or a stripe as in the conventional color cathode-ray tube. Preferably, each element is in the form of a dot. The light emitting elements are formed on the face plate using a known method such as optical printing. Generally a metal back is provided on the rear face of the fluorescent screen as in the fluorescent screen of the black-and-white cathode-ray tube. Further, a shadow mask is generally provided between the fluorescent screen and electron guns which is generally three in number. The mechanical arrangement of the high resolution color cathode-ray tube of the present invention is the same as that of known one. Therefore, it will not be described in detail.

The color of light emitted from the fluorescent screen of the high resolution color cathode-ray tube of the present invention after interruption of excitation does not differ from that of during excitation unlike the fluorescent screen using the known light blue phosphor.

In the long afterglow blue emitting phosphor of the present invention, a part of the first co-activator (Ga and/or In) may be replaced by scandium. Phosphors activated with scandium instead of Ga and/or In as the first co-activator exhibit slightly extended afterglow time. However, extension of the afterglow time obtained by scandium is much less than the same obtained by Ga and/or In. Further, the phosphors of the present invention may be further activated with divalent europium, bismuth, antimony and the like.

Surface processing and selection of the grain size known in conventional sulfide phosphors may be applied to the phosphor of the present invention.

The present invention will be further described by the following examples.

**0 078 538**

Example 1

| | | |
|---|---|---|
| Zinc sulfide green powder | ZnS | 2000 g |
| Silver nitrate | AgNO | 0.32 g |
| Gallium nitrate | $Ga(NO_3)_3 \cdot 8H_2O$ | 1.15 g |
| Sodium chloride | NaCl | 10 g |
| Magnesium chloride | $MgCl_2$ | 10 g |

The above raw materials were mixed well with each other by means of a ball mill and then a proper amount of sulfur and carbon were added thereto. The mixture obtained was placed in a quartz crucible and fired for 3 hours at 950°C in an electric furnace with the lid of the crucible being covered. This firing was performed in a carbon disulfide atmosphere in the crucible. After firing, the fired product was washed with water, dried and sieved to provide a ZnS:Ag, Ga, Cl phosphor in which the activating amounts of Ag, Ga and Cl were $10^{-2}$%, $10^{-2}$% and $10^{-4}$%, respectively.

The obtained phosphor emitted blue light having high color purity the emission spectrum of which was as shown by the line *b* in Figure 1. Further the 10% afterglow time after interruption of excitation of the phosphor was about 40 ms.

Example 2

A ZnS:Ag, Ga, Cl phosphor in which the activating amounts of Ag, Ga and Cl were $10^{-2}$%, $2\times10^{-3}$% and $10^{-4}$%, respectively, was obtained in the same manner as described in Example 1 except that the amount of $Ga(NO_3)_3 \cdot 8H_2O$ was 0.23 g.

The obtained phosphor emitted blue light having high color purity under excitation by an electron beam and the 10% afterglow time of the phosphor was about 35 ms.

Example 3

A ZnS:Ag, Ga, Cl phosphor in which the activating amounts of Ag, Ga and Cl were $10^{-2}$%, $4\times10^{-4}$% and $10^{-4}$%, respectively, was obtained in the same manner as described in Example 1 except that the amount of $Ga(NO_3)_3 \cdot 8H_2O$ was 0.046 g.

The obtained phosphor emitted blue light having high color purity under excitation by an électron beam and the 10% afterglow time of the phosphor was about 18 ms.

Example 4

A ZnS:Ag, Ga, Cl phosphor in which the activating amounts of Ag, Ga and Cl were $10^{-2}$%, $10^{-1}$% and $10^{-4}$%, respectively, was obtained in the same manner as described in Example 1 except that the amount of $Ga(NO_3)_3 \cdot 8H_2O$ was 11.48 g.

The obtained phosphor emitted blue light having high color purity under excitation by an electron beam, and the emission spectrum thereof was as shown by the line *d* in Figure 1. Further, the 10% afterglow time of the phosphor was about 18 ms.

Example 5

| | | |
|---|---|---|
| Zinc sulfide green powder | ZnS | 2000 g |
| Silver nitrate | $AgNO_3$ | 0.32 g |
| Indium nitrate | $In(NO_3)_3 \cdot 3H_2O$ | 0.682 g |
| Sodium chloride | NaCl | 10 g |
| Magnesium chloride | MgCl | 10 g |

A ZnS:Ag, In, Cl phosphor in which the activating amounts of Ag, In and Cl were $10^{-2}$%, $10^{-2}$% and $10^{-4}$%, respectively, was obtained in the same manner as described in Example 1 except that the above raw materials were used.

The obtained phosphor emitted blue light having high color purity under excitation by an electron beam and the 100% afterglow time of the phosphor was about 55 ms.

Example 6

A ZnS:Ag, In, Cl phosphor in which the activating amounts of Ag, In and Cl were $10^{-2}$%, $10^{-1}$% and

12

$10^{-4}$%, respectively, was obtained in the same manner as described in Example 5 except that the amount of In(NO$_3$)$_3$ · 3H$_2$O was 6.18 g.

The obtained phosphor emitted blue light having high color purity under excitation by an electron beam and the 10% afterglow time of the phosphor was about 12 ms.

Example 7

A ZnS:Ag, In, Cl phosphor in which the activating amounts of Ag, In and Cl were $10^{-2}$%, $2 \times 10^{-4}$% and $10^{-4}$%, respectively, was obtained in the same manner as described in Example 5 except that the amount of the In(NO$_3$)$_3$ · 3H$_2$O was 0.0124 g.

The obtained phosphor emitted blue light having high color purity under excitation by an electron beam and the 10% afterglow time of the phosphor was about 14 ms.

Example 8

A ZnS:Ag, In, Cl phosphor in which the activating amounts of Ag, In and Cl were $10^{-2}$%, $2 \times 10^{-2}$%, and $10^{-6}$, respectively was obtained in the same manner as described in Example 5 except that the amount of the In(NO$_3$)$_3$ · 8H$_2$O was 1.236 g.

The obtained phosphor emitted blue light having high color purity under excitation by an electron beam, and the emission spectrum thereof was as shown by the line $d$ in Figure 2. Further, the 15% afterglow time of the phosphor was about 50 ms.

Example 9

| Zinc sulfide green powder | ZnS | 2000 g |
|---|---|---|
| Silver nitrate | AgNO$_3$ | 0.32 g |
| Gallium nitrate | Ga(NO$_3$)$_3$ · 8H$_2$O | 1.15 g |
| Indium nitrate | In(NO$_3$)$_3$ · 3H$_2$O | 0.124 g |
| Sodium chloride | NaCl | 10 g |
| Magnesium chloride | MgCl$_2$ | 10 g |

A ZnS:Ag, Ga, In, Cl phosphor in which the activating amounts of Ag, Ga, In and Cl were $10^{-2}$%, $10^{-2}$%, $2 \times 10^{-3}$% and $10^{-4}$%, respectively, was obtained in the same manner as described in Example 1 except that the above raw materials were used.

The obtained phosphor emitted blue light under excitation by an electron beam and the 10% afterglow time of the phosphor was about 55 ms.

Example 10

| Zinc sulfide green powder | ZnS | 2000 g |
|---|---|---|
| Silver nitrate | AgNO$_3$ | 0.32 g |
| Gallium nitrate | Ga(NO$_3$)$_3$ · 8H$_2$O | 1.15 g |
| Copper sulfate | CuSO$_4$ | 0.01 g |
| Sodium chloride | NaCl | 10 g |
| Magnesium chloride | MgCl$_2$ | 10 g |

A ZnS:Ag, Ga, Cu, Cl phosphor in which the activating amounts of Ag, Ga, Cu and Cl were $10^{-2}$%, $10^{-2}$%, $2 \times 10^{-4}$% and $10^{-4}$%, respectively, was obtained in the same manner as described in Example 1 except that the above raw materials were used.

The obtained phosphor emitted blue light under excitation by an electron beam and the emission spectrum thereof was as shown by the line $b$ in Figure 6. Further, the 10% afterglow time of the phosphor was about 40 ms. Further, the luminance of emission of the phosphor was 50% higher than that of the ZnS:Ag, Ga, Cl phosphor activated with the same amount of Ag, Ga and Cl as the phosphor obtained.

Example 11

A ZnS:Ag, Ga, Cu, Cl phosphor in which the activating amounts of Ag, Ga, Cu and Cl were $10^{-2}$%, $2 \times 10^{-3}$%, $2 \times 10^{-4}$% and $10^{-4}$%, respectively, was obtained in the same manner as described in Example 10 except that the amount of the Ga(NO$_3$)$_3$ · 8H$_2$O was 0.23 g.

**0 078 538**

The obtained phosphor emitted blue light under excitation by an electron beam and the 10% afterglow time of the phosphor was about 35 ms. Further, the luminance of emission of the phosphor was 50% higher than that of the ZnS:Ag, Ga, Cl phosphor activated with the same amount of Ag, Ga and Cl as the phosphor obtained.

Example 12

A ZnS:Ag, Ga, Cu, Cl phosphor in which the activating amounts of Ag, Ga, Cu and Cl were $10^{-2}\%$, $4\times10^{-4}\%$, $10^{-4}\%$ and $10^{-4}\%$, respectively, was obtained in the same manner as described in Example 10 except that 0.046 g of $Ga(NO_3)_3 \cdot 8H_2O$ and 0.005 g of copper sulfate were used.

The obtained phosphor emitted blue light under excitation by an electron beam and the 10% afterglow time of the phosphor was about 18 ms. Further, the luminance of emission of the phosphor was 35% higher than that of the ZnS:Ag, Ga, Cl phosphor activated with the same amount of Ag, Ga and Cl as the phosphor obtained.

Example 13

A ZnS:Ag, Ga, Au, Cl phosphor in which the activating amounts of Ag, Ga, Au and Cl were $10^{-2}\%$, $10^{-2}\%$, $2\times10^{-3}\%$ and $10^{-4}\%$, respectively, was obtained in the same manner as described in Example 10 except that 0.084 g of $HAuCl_4 \cdot 4H_2O$ was used instead of copper sulfate.

The obtained phosphor emitted blue light having high color intensity under excitation by an electron beam and the emission spectrum thereof was as shown by the line *c* in Figure 6. Further, the 10% afterglow time of the phosphor was about 40 ms.

Further, the luminance of emission of the phosphor was 80% higher than that of the ZnS:Ag, Ga, Cl phosphor activated with the same amount of Ag, Ga and Cl as the phosphor obtained.

Example 14

A ZnS:Ag, Ga, Au, Cl phosphor in which the activating amounts of Ag, Ga, Au and Cl were $10^{-2}\%$, $2\times10^{-3}\%$, $2\times10^{-3}\%$ and $10^{-4}\%$, respectively, was obtained in the same manner as described in Example 13 except that the amount of $Ga(NO_3)_3 \cdot 8H_2O$ was 0.23 g.

The obtained phosphor emitted blue light under excitation by an electron beam and the 10% afterglow time of the phosphor was about 35 ms. Further, the luminance of emission of the phosphor was 80% higher than that of the ZnS:Ag, Ga, Cl phosphor activated with the same amount of Ag, Ga and Cl as the phosphor obtained.

Example 15

Ammonium sulfide was added to aqueous zinc sulfate solution maintaining the pH value thereof at 5 to precipitate zinc sulfide. The zinc sulfide thus obtained included 7% by of sulfur in excess of stoichiometric amount on the basis of the weight of the zinc sulfide. A ZnS:Ag, Ga, Cu, Cl phosphor with sulfur in which the amounts of Ag, Ga, Cu, Cl and S were $10^{-2}\%$, $10^{-2}\%$, $2\times10^{-4}\%$, $10^{-4}\%$ and $10^{-4}\%$, respectively, was obtained in the same manner as described in Example 10 except that the following raw materials were used.

| | |
|---|---|
| Zinc sulfide green powder including therein 140 g excess Sulfur | 2140 g (zinc sulfide 2000 g + sulfur 140 g) |
| $AgNO_3$ | 0.32 g |
| $Ga(NO_3)_3 \cdot 8H_2O$ | 1.15 g |
| $CuSO_4$ | 0.01 g |
| NaCl | 10 g |
| $MgCl_2$ | 10 g |

The obtained phosphor emitted blue light having high color intensity under excitation by an electron beam and the emission spectrum thereof was as shown by the line *b* in Figure 6. Further, the 10% afterglow time of the phosphor was about 40 ms.

Further, the luminance of emission of the phosphor was 61% higher than that of the ZnS:Ag, Ga, Cl phosphor without sulfur activated with the same amount of Ag, Ga and Cl as the phosphor obtained.

Example 16

A ZnS:Ag, Ga, Au, Cl phosphor with sulfur in which the amounts of Ag, Ga, Au, Cl and S were $10^{-2}\%$, $2\times10^{-3}\%$, $10^{-4}\%$ and $10^{-4}\%$, respectively, was obtained in the same manner as described in Example 15 except that 0.084 g of $HAuCl_4 \cdot 4H_2O$ was used instead of $CuSO_4$.

14

The obtained phosphor emitted blue light under excitation by an electron beam and the 10% afterglow time of the phosphor was about 40 ms.

Further, the luminance of emission of the phosphor was 92% higher than that of ZnS:Ag, Ga, Cl phosphor without sulfur activated with the same amount of Ag, Ga and Cl as the phosphor obtained.

Example 17

A ZnS:Ag, In, Cu, Cl phosphor in which the amounts of Ag, In, Cu and Cl were $10^{-2}$%, $10^{-2}$%, $2 \times 10^{-4}$% and $10^{-4}$%, respectively, was obtained in the same manner as described in Example 1 except that the following raw materials were used.

| | |
|---|---|
| ZnS | 2000 g |
| AgNO$_3$ | 0.32 g |
| In(NO$_3$)$_3 \cdot$ 3H$_2$O | 0.618 g |
| CuSO$_4$ | 0.01 g |
| NaCl | 10 g |
| MgCl$_2$ | 10 g |

The obtained phosphor emitted blue light under excitation by an electron beam and the emission spectrum of the phosphor was as shown by the line *b* in Figure 7. Further, the 10% afterglow time of the phosphor was about 55 ms.

Further, the luminance of emission of the phosphor was 50% higher than that of ZnS:Ag, In, Cl phosphor which was activated with the same amount of Ag, In and Cl as the phosphor obtained.

Example 18

A ZnS:Ag, In, Cu, Cl phosphor in which the amounts of Ag, In, Cu and Cl were $10^{-2}$%, $2 \times 10^{-3}$%, $2 \times 10^{-4}$% and $10^{-4}$%, respectively, was obtained in the same manner as described in Example 15 except that 0.124 g of In(NO$_3$)$_3 \cdot$ 3H$_2$O was used.

The obtained phosphor emitted blue light under excitation by an electron beam and the 10% afterglow time of the phosphor was about 35 ms.

Further, the luminance of emission of the phosphor was 50% higher than that of ZnS:Ag, In, Cl phosphor which was activated with the same amount of Ag, In, and Cl as the phosphor obtained.

Example 19

A ZnS:Ag, In, Cu, Cl phosphor in which the amounts of Ag, In, Cu and Cl were $10^{-2}$%, $4 \times 10^{-4}$%, $10^{-4}$% and $10^{-4}$%, respectively, was obtained in the same manner as described in Example 17 except that 0.024 g of In(NO$_3$)$_3 \cdot$ 3H$_2$O and 0.005 g of CuSO$_4$ were used.

The obtained phosphor emitted blue light under excitation by an electron beam and the 10% afterglow time of the phosphor was about 15 ms.

Further, the luminance of emission of the phosphor was 35% higher than that of ZnS:Ag, In, Cl phosphor activated with the same amount of Ag, In and Cl as the phosphor obtained.

Example 20

A ZnS:Ag, In, Au, Cl phosphor in which the amounts of Ag, In, Au and Cl were $10^{-2}$%, $10^{-2}$%, $2 \times 10^{-3}$% and $10^{-4}$%, respectively, was obtained in the same manner as described in Example 17 except that 0.084 g of HAuCl$_4 \cdot$ 4H$_2$O was used instead of copper sulfate.

The obtained phosphor emitted blue light under excitation by an electron beam and the emission spectrum of the phosphor was as shown by the line *c* in Figure 7. Further, the 10% afterglow time of the phosphor was about 55 ms.

Further, the luminance of emission of the phosphor was 80% higher than that of ZnS:Ag, In, Cl phosphor activated with the same amount of Ag, In and Cl as the phosphor obtained.

Example 21

A ZnS:Ag, In, Au, Cl phosphor in which the amounts of Ag, In, Au and Cl were $10^{-2}$%, $2 \times 10^{-3}$%, $2 \times 10^{-3}$% and $10^{-4}$%, respectively, was obtained in the same manner as described in Example 20 except that 0.124 g of In(NO$_3$)$_3 \cdot$ 3H$_2$O was used.

The obtained phosphor emitted blue light under excitation by an electron beam and the 10% afterglow time of the phosphor was about 15 ms.

Further, the luminance of emission of the phosphor was 80% higher than that of ZnS:Ag, In, Cl phosphor activated with the same amount of Ag, In and Cl as the phosphor obtained.

# 0 078 538

## Example 22

A ZnS:Ag, In, Cu, Cl phosphor containing therein $10^{-4}$% sulfur in which the activating amounts of Ag, In, Cu and Cl were $10^{-2}$%, $10^{-2}$%, $2\times10^{-4}$% and $10^{-4}$%, respectively, was obtained in the same manner as described in Example 15 except that the following raw materials were used.

| | |
|---|---|
| Zinc sulfide green powder containing therein 140 g excess sulfur obtained in the same manner described in Example 15 | 2140 g (ZnS 200 g+ S 140 g) |
| $AgNO_3$ | 0.32 t |
| $In(NO_3)_3 \cdot 3H_2O$ | 0.618 g |
| $CuSO_4$ | 0.01 g |
| NaCl | 10 g |
| $MgCl_2$ | 10 g |

The obtained phosphor emitted blue light under excitation by an electron beam and the emission spectrum of the phosphor was substantially as shown by the line $b$ in Figure 7. Further, the 10% afterglow time of the phosphor was about 55 ms. Further, the luminance of emission of the phosphor was 61% higher than that of a ZnS:Ag, In, Cl phosphor without sulfur activated with the same amounts of Ag, In and Cl as the phosphor.

## Example 23

A ZnS:Ag, In, Au, Cl phosphor containing therein $10^{-4}$% sulfur in which the amounts of Ag, In, Au and Cl were $10^{-2}$%, $10^{-2}$%, $2\times10^{-3}$% and $10^{-4}$%, respectively, was obtained in the same manner as described in Example 22 except that 0.084 g of $HAuCl_4 \cdot 4H_2O$ was used instead of $CuSO_4$.

The obtained phosphor emitted blue light under excitation by an electron beam and the 10% afterglow time of the phosphor was about 55 ms.

Further, the luminance of emission of the phosphor was 92% higher than that of ZnS:Ag, In, Cl phosphor without sulfur activated with the same amount of Ag, In and Cl as the phosphor obtained.

## Example 24

A ZnS:Ag, Ga, Cl phosphor containing therein $10^{-4}$% sulfur in which the activating amounts of Ag, Ga and Cl were $10^{-2}$%, $10^{-2}$%, and $10^{-4}$%, respectively, was obtained in the same manner as described in Example 1 except that the following raw materials were used.

| | |
|---|---|
| Zinc sulfide green powder containing therein 140 g excess sulfur obtained in the same manner described in Example 15 | 2140 g (ZnS 200 g+ S 140 g) |
| $AgNO_3$ | 0.32 g |
| $Ga(NO_3)_3 \cdot 8H_2O$ | 1.15 g |
| NaCl | 10 g |
| $MgCl_2$ | 10 g |

The obtained phosphor emitted blue light under excitation by an electron beam and the emission spectrum of the phosphor was substantially as shown by the line $b$ in Figure 1. Further, the 10% afterglow time of the phosphor was about 40 ms.

## Example 25

A ZnS:Ag, Ga, Cl phosphor containing therein $10^{-4}$% sulfur in which the amounts of Ag, Ga and Cl were $10^{-2}$%, $2\times10^{-3}$% and $10^{-4}$% respectively, was obtained in the same manner as described in Example 24 except that 0.23 g of $Ga(NO_3)_3 \cdot 8H_2O$ was used.

The obtained phosphor emitted blue light of high color purity under excitation by an electron beam and the 10% afterglow time of the phosphor was about 35 ms.

16

Example 26

A ZnS:Ag, Ga, Cl phosphor containing therein $10^{-4}$% sulfur in which the amounts of Ag, Ga and Cl were $10^{-2}$%, $4 \times 10^{-4}$% and $10^{-4}$% respectively, was obtained in the same manner as described in Example 24 except that 0.046 g of $Ga(NO_3)_3 \cdot 8H_2O$ was used.

The obtained phosphor emitted blue light of high color purity under excitation by an electron beam and the 10% afterglow time of the phosphor was about 18 ms.

Example 27

A ZnS:Ag, Ga, Cl phosphor containing therein $10^{-4}$% sulfur in which the amounts of Ag, Ga and Cl were $10^{-2}$%, $10^{-1}$%, and $10^{-4}$% respectively, was obtained in the same manner as described in Example 24 except that 11.48 g of $Ga(NO_3)_3 \cdot 8H_2O$ was used.

The obtained phosphor emitted blue light under excitation by an electron beam and the emission spectrum of the phosphor was as shown by the line $d$ in Figure 1. Further, the 10% afterglow time of the phosphor was about 18 ms.

Example 28

A ZnS:Ag, In, Cl phosphor containing therein $10^{-4}$% sulfur in which the activating amounts of Ag, In, Cu and Cl were $10^{-2}$%, $10^{-2}$%, and $10^{-4}$%, respectively, was obtained in the same manner as described in Example 1 except that the following raw materials were used.

| | |
|---|---|
| Zinc sulfide green powder containing therein 140 g excess sulfur obtained in the same manner described in Example 15 | 2140 g (ZnS 2000 g+ S 140 g) |
| $AgNO_3$ | 0.32 g |
| $In(NO_3)_3 \cdot 3H_2O$ | 0.618 g |
| NaCl | 10 g |
| $MgCl_2$ | 10 g |

The obtained phosphor emitted blue light under excitation by an electron beam and the emission spectrum of the phosphor was substantially as shown by the line $b$ in Figure 2. Further, the 10% afterglow time of the phosphor was about 55 ms.

Example 29

A ZnS:Ag, In, Cl phosphor containing therein $10^{-4}$% sulfur in which the amounts of Ag, In and Cl were $10^{-2}$%, $10^{-1}$% and $10^{-4}$% respectively, was obtained in the same manner as described in Example 28 except that 6.18 g of $In(NO_3)_3 \cdot 3H_2O$ was used.

The obtained phosphor emitted blue light under excitation by an electron beam and the 10% afterglow time of the phosphor was about 12 ms.

Example 30

A ZnS:Ag, In, Cl phosphor containing therein $10^{-4}$% sulfur in which the amounts of Ag, In and Cl were $10^{-2}$%, $2 \times 10^{-4}$% and $10^{-4}$% respectively, was obtained in the same manner as described in Example 28 except that 0.0124 g of $In(NO_3)_3 \cdot 3H_2O$ was used.

The obtained phosphor emitted blue light of high color purity under excitation by an electron beam and the 10% afterglow time of the phosphor was about 14 ms.

Example 31

A ZnS:Ag, In, Cl phosphor containing therein $10^{-4}$% sulfur in which the amounts of Ag, In and Cl were $10^{-2}$%, $2 \times 10^{-2}$% and $10^{-4}$% respectively, was obtained in the same manner as described in Example 28 except that 1.236 g of $In(NO_3)_3 \cdot 3H_2O$ was used.

The obtained phosphor emitted blue light under excitation by an electron beam and the emission spectrum of the phosphor was substantially as shown by the line $d$ in Figure 2. Further, the 10% afterglow time of the phosphor was about 50 ms.

Example 32

Blue, green and red emitting component phosphors having the following characteristics were uniformly mixed in the following mixing ratio to produce a white emitting mixed phosphor. The mixed phosphor was evenly applied to a face plate using the known sedimentation coating method to make a fluorescent screen. Then a black-and-white cathode-ray tube in accordance with an embodiment of the

17

# 0 078 538

present invention was produced according to a known method commonly used in the production of black-and-white cathode-ray tubes.

| | |
|---|---|
| Blue emitting component phosphor consisting of a ZnS:Ag, Ga, Cl phosphor of the present invention wherein | 40% by weight |
| the activating amount of Ag | $10^{-2}\%$ |
| the activating amount of Ga | $1.5\times10^{-3}\%$ |
| the activating amount of Cl | $10^{-4}\%$ |
| 10% afterglow time | 30 ms |
| the main crystalline phase | cubic system |
| Green emitting component phosphor consisting of a known $Zn_2SiO_4$: Mn, As phosphor the 10% afterglow time of which is 65 ms | 30% by weight |
| Red emitting component phosphor consisting of a known $(Zn, Mg)_3(PO_4)_2$:Mn phosphor the 10% afterglow time of which is 133 ms. | 30% by weight |

Further, a conventional black-and-white cathode-ray tube was produced in the same manner except that a short afterglow emitting ZnS:Ag, Cl phosphor in which the main crystalline phase was of a cubic system and the activating amounts of Ag and Cl were equal to those of said ZnS:Ag, Ga, Cl phosphor was used instead of it. That is, the fluorescent screen of the cathode-ray tube obtained was provided with a fluorescent layer including a light blue emitting phosphor obtained by mixing the ZnS:Ag, Cl phosphor, said $Zn_2SiO_4$:Mn, As phosphor and said $(Zn, Mg)_3(PO_4)_2$:Mn phosphor as the blue emitting component phosphor.

Under excitation by a electron beam both the screens of the cathode-ray tube of the present invention and the conventional cathode-ray tube emitted white light the spectrum of which was as shown by the line *a* in Figure 14. However, the fluorescent screen of the conventional cathode-ray tube emitted yellow-green light 15 ms after interruption of excitation, and yellow light 30 ms after the interruption, while the screen of the cathode-ray tube of the present invention emitted light of substantially white in color both 15 ms and 30 ms after interruption of excitation. The lines *b* and *c* in Figure 14 show the emission spectra of the screen according to the present invention 15 ms and 30 ms after interruption of excitation, respectively. Further, the line *d* and *e* in Figure 14 show the emission spectra of the screen of the conventional cathode-ray tube 15 ms and 30 ms after interruption of excitation, respectively. As can be seen from the spectra, the light emitted from the screen of the cathode-ray tube of the present invention still includes the blue component until a lapse of 30 ms after interruption of excitation, while the light emitted from the screen of the conventional cathode-ray tube has lost the blue component before a lapse of 15 ms after interruption of excitation.

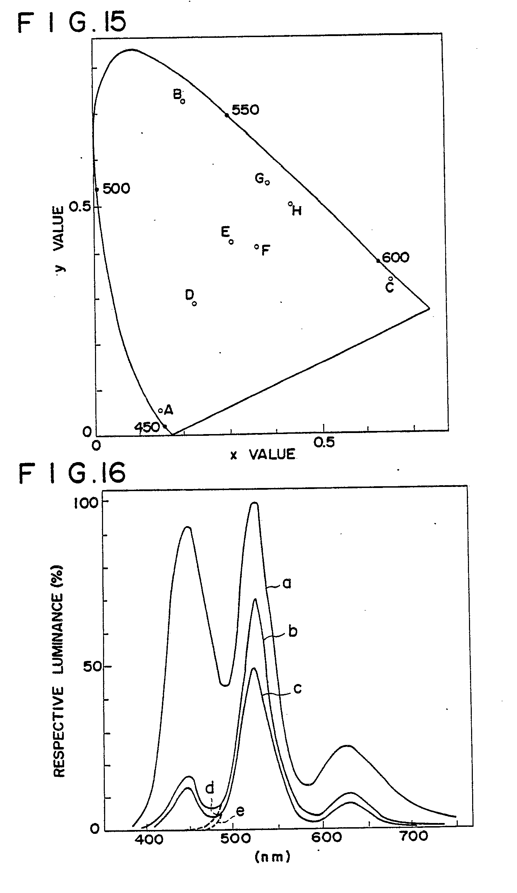

Figure 15 is a CIE chromaticity graph showing chromaticity points of emission of the screens of the cathode-ray tube of thee present invention and the conventional cathode-ray tube under excitation by an electron beam, 15 ms after interruption of the excitation and 30 ms after interruption of the same. Further, the chromaticity point of emission of each phosphor forming the screens is also shown in Figure 15. In Figure 15, the point A indicates the chromaticity of the long afterglow ZnS:Ag, Ga, Cl phosphor forming the screen of the cathode-ray tube of the present invention or the short afterglow ZnS:Ag, Cl phosphor forming the screen of the conventional cathode-ray tube. The points B and C indicate the chromaticity of the $Zn_2SiO_4$:Mn, As phosphor and the same of the $(Zn, Mg)_3(PO_4)_2$:Mn phosphor, respectively which are common to both the cathode-ray tube.

Under excitation by an electron beam, either of the screens emitted white light the chromaticity of which was represented by the point D (corresponding to the line *a* in Figure 14). The chromaticity point of emission of the screen according to the present invention moved to the point E (corresponding to the line *b* in Figure 14) 15 ms after interruption of the excitation and the further moved to the point F 30 ms after the same. However the points E and F are in white region and accordingly the color drift after interruption of excitation in the screen according to the present invention is only slight. On the other hand, the chromaticity point of emission of the screen of the conventional cathode-ray moved 15 ms after interruption of excitation to the point G (corresponding to the line *d* in Figure 14) which was in yellow-green region, and then further moved 30 ms after interruption of excitation to the point H (corresponding to the line *e* in Figure 14) which was in yellow region. Thus the color drift after interruption of excitation in the screen of the conventional cathode-ray tube is significant.

18

Example 33

A black-and-white cathode-ray tube was produced in the same manner as described in Example 32 except that the fluorescent screen was formed of the blue, green and red component phosphors having the following characteristics and mixed with each other in the following ratio.

Blue emitting component phosphor          40% by weight
consisting of the same ZnS:Ag, Ga, Cl phosphor as used in Example 32.

Green emitting component phosphor          40% by weight
consisting of the same $Zn_2SiO_4$:Mn, As phosphor (33% by weight) as used in Example 32 and a short afterglow time ZnS:Cu, Al phosphor (7% by weight), and having the afterglow time of 30 ms

Red emitting component phosphor          20% by weight
consisting of the same $(Zn, Mg)_3(PO_4)_2$:Mn phosphor (12% by weight) as used in Example 32 and a short afterglow time $Y_2O_2S$:Eu phosphor (8% by weight), and having the afterglow time of 30 ms.

The screen of the obtained cathode-ray tube emitted white light under excitation by an electron beam and the chromaticity point of emission thereof did not change before or upon a lapse of 15 ms after interruption of the excitation.

Example 34

A black-and-white cathode-ray tube was produced in the same manner as described in Example 32 except that the fluorescent screen was formed of the blue, green and red component phosphors having the following characteristics and mixed with each other in the following ratio.

Blue emitting component phosphor          40% by weight
Consisting of the same ZnS:Ag, Ga, Cl phosphor as used in Example 32

Green emitting component phosphor          40% by weight
consisting of a $Zn_2SiO_4$:Mn phosphor the 10% afterglow time of which is 28 ms

Red emitting component phosphor          20% by weight
consisting of $3Cd_3(PO_4)_2 \cdot CdCl_2$:Mn phosphor the 10% afterglow time of which is 36 ms

The screen of the obtained cathode-ray tube emitted white light having the same chromaticity point as that of the light emitted from the screen of Example 33 under excitation by an electron beam, and the chromaticity point hardly changed before or upon a lapse of 15 ms after interruption of the excitation.

Example 35

A black-and-white cathode-ray tube was produced in the same manner as described in Example 32 except that the fluorescent screen was formed of the blue, green and red component phosphors having the following characteristics and mixed with each other in the following ratio.

Blue emitting component phosphor          37% by weight
consisting of a ZnS:Ag, Ga, Cl phosphor of the present invention    with sulfur
wherein,

the activating amount of Ag          $10^{-2}$%

the activating amount of Ga          $1.5 \times 10^{-3}$%

the activating amount of Cl          $10^{-4}$%

the sulfur content          $10^{-4}$%

10% afterglow time          30 ms

19

**0 078 538**

| | |
|---|---|
| the main crystalline phase | cubic system |

| | |
|---|---|
| Green emitting component phosphor<br>consisting of the same $Zn_2SiO_4$:Mn, As phosphor (34% by weight) as used in Example 32 and a short afterglow time ZnS:Cu, Al phosphor (8% by weight), and having the afterglow time of 30 ms | 42% by weight |

| | |
|---|---|
| Red emitting component phosphors<br>consisting of the same $(Zn, Mg)_3(PO_4)_2$:Mn phosphor (13% by weight) as used in Example 32 and a short afterglow time $Y_2O_2S$:Eu phosphor (8% by weight), and having the afterglow time of 30 ms. | 21% by weight |

The screen of the obtained cathode-ray tube emitted white light having the same chromaticity point as that of the light emitted from the screen of Example 33 under excitation by an electron beam, and the chromaticity point hardly changed before or upon a lapse of 15 ms after interruption of the excitation.

Further the luminance of emission of the former screen was 3% higher than that of the latter screen.

Example 36

A black-and-white cathode-ray tube was produced in the same manner as described in Example 32 except that the fluorescent screen was formed of the blue, green and red component phosphors having the following characteristics and mixed with each other in the following ratio.

| | |
|---|---|
| Blue emitting component phosphor<br>consisting of a ZnS:Ag, Ga, Cu, Cl phosphor with sulfur of the present invention wherein, | 32% by weight |
| the activating amount of Ag | $10^{-2}$% |
| the activating amount of Ga | $1.5\times10^{-3}$% |
| the activating amount of Cu | $10^{-4}$% |
| the activating amount of Cl | $10^{-4}$% |
| the sulfur content | $10^{-4}$% |
| 10% afterglow time | 30 ms |
| the main crystalline phase | cubic system |

| | |
|---|---|
| Green emitting component phosphor<br>consisting of the same $Zn_2SiO_4$:Mn, As phosphor (36% by weight) as used in Example 32 and a short afterglow time ZnS:Cu, Al phosphor (8% by weight), and having the afterglow time of 30 ms | 44% by weight |

| | |
|---|---|
| Red emitting component phosphor<br>consisting of the same $(Zn, Mg)_3(PO_4)_2$:Mn phopshor (14% by weight) as used in Example 32 and a short afterglow time $Y_2O_2S$:Eu phosphor (10% by weight), and having the afterglow time of 30 ms. | 24% by weight |

The screen of the obtained cathode-ray tube emitted white light having the same chromaticity point as that of the light emitted from the screen of Example 33 under excitation by an electron beam, and the chromaticity point hardly changed before or upon a lapse of 15 ms after interruption of the excitation.

Further the luminance of emission of the former screen was 7% higher than that of the latter screen.

Example 37

A black-and-white cathode-ray tube was produced in the same manner as described in Example 32 except that the fluorescent screen was formed of the blue, green and red component phosphors having the following characteristics and mixed with each other in the following ratio.

20

| | |
|---|---|
| Blue emitting component phosphor<br>consisting of a ZnS:Ag, Ga, Au, Cl phosphor with sulfur of the<br>present invention wherein, | 32% by weight |
| the activating amount of Ag | $10^{-2}$% |
| the activating amount of Ga | $1.5 \times 10^{-3}$% |
| the activating amount of Au | $10^{-3}$% |
| the activating amount of Cl | $10^{-4}$% |
| the sulfur content | $10^{-4}$% |
| 10% afterglow time | 30 ms |
| the main crystalline phase | cubic system |
| Green emitting component phosphor<br>consisting of the same $Zn_2SiO_4$:Mn, As phosphor (36% by<br>weight) as used in Example 32 and a short afterglow time ZnS:Cu,<br>Al phosphor (8% by weight), and having the afterglow time of 30<br>ms | 44% by weight |
| Red emitting component phosphor<br>consisting of the same $(Zn, Mg)_3(PO_4)_2$:Mn phosphor (14% by<br>weight) as used in Example 32 and a short afterglow time<br>$Y_2O_2S$:Eu phosphor (10% by weight), and having the afterglow<br>time of 30 ms. | 24% by weight |

The screen of the obtained cathode-ray tube emitted white light having the same chromaticity point as that of the light emitted from the screen of Example 33 under excitation by an electron beam, and the chromaticity point hardly changed before or upon a lapse of 15 ms after interruption of the excitation. Further the luminance of emission of the former screen was 7% higher than that of the latter screen.

Example 38

A black-and-white cathode-ray tube was produced in the same manner as described in Example 32 except that as the blue component phosphor was used a ZnS:Ag, In, Cl phosphor which was activated with $10^{-2}$% Ag, $2 \times 10^{-3}$% In and $10^{-4}$% Cl, and the afterglow time of which was 30 ms. The main crystalline phase of the above phosphor was of a cubic system.

Under excitation by a electron beam both the screens of the cathode-ray tube of the present invention and the conventional cathode-ray tube (in Example 32) emitted white light the spectrum of which was as shown by the line *a* in Figure 16. However, the fluorescent screen of the conventional cathode-ray tube emitted yellow-green light 15 ms after interruption of excitation, and yellow light 30 ms after the interruption, while the screen of the cathode-ray tube of the present invention emitted light of substantially white in color both 15 ms and 30 ms after interruption of excitation. The lines *b* and *c* in Figure 16 show the emission spectra of the screen according to the present invention 15 ms and 30 ms after interruption of excitation, respectively. Further, the lines *d* and *e* in Figure 16 show the emission spectra of the screen of the conventional cathode-ray tube 15 ms and 30 ms after interruption of excitation, respectively. As can be seen from the spectra, the light emitted from the screen of the cathode-ray tube of the present invention still includes the blue component until a lapse of 30 ms after interruption of excitation, while the light emitted from the screen of the conventional cathode-ray tube has lost the blue component before a lapse of 15 ms after interruption of excitation.

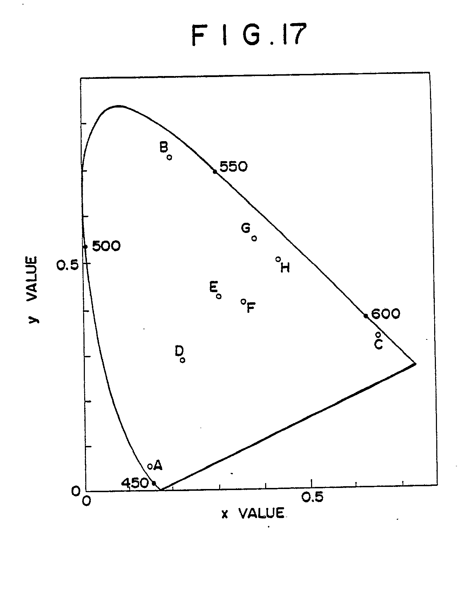

Figure 17 is a CIE chromaticity graph showing chromaticity points of emission of the screens of the cathode-ray tube of the present invention and the conventional cathode-ray tube under excitation by an electron beam, 15 ms after interruption of the excitation and 30 ms after interruption of the same. Further, the chromaticity point of emission of each phosphor forming the screens is also shown in Figure 17. In Figure 17, the point A indicates the chromaticity of the long afterglow ZnS:Ag, In, Cl phosphor forming the screen of the cathode-ray tube of the present invention or the short afterglow ZnS:Ag, Cl phosphor forming the screen of the conventional cathode-ray tube. The points B and C indicate the chromaticity of the $Zn_2SiO_4$:Mn, As phosphor and the same of the $(Zn, Mg)_3(PO_4)_2$:Mn phosphor, respectively, which are common to both the cathode-ray tube.

Under excitation by an electron beam, either of the screens emitted white light the chromaticity of which was represented by the point D (corresponding to the line *a* in Figure 16). The chromaticity point of emission of the screen according to the present invention moved to the point E (corresponding to the line *b*

21

in Figure 16) 15 ms after interruption of the excitation and the further moved to the point F 30 ms after the same. However, the points E and F are in white region and accordingly the color drift after interruption of excitation in the screen according to the present invention is only slight. On the other hand, the chromaticity point of emission of the screen of the conventional cathode-ray moved 15 ms after interruption of excitation to the point G (corresponding to the line $d$ in Figure 16) which was in yellow-green region, and then further moved 31 ms after interruption of excitation to the point H (corresponding to the line $e$ in Figure 16) which was in yellow region. Thus the color drift after interruption of excitation in the screen of the conventional cathode-ray tube is significant.

Example 39

A black-and-white cathode-ray tube was produced in the same manner as described in Example 32 except that the fluorescent screen was formed of the blue, green and red component phosphors having the following characteristics and mixed with each other in the following ratio.

| | |
|---|---|
| Blue emitting component phosphor<br>consisting of the same ZnS:Ag, In, Cl phosphor as used in<br>Example 3 | 40% by weight |
| Green emitting component phosphor<br>consisting of the same $Zn_2SiO_4$:Mn, As phosphor (33% by<br>weight) as used in Example 32 and a short afterglow time ZnS:Cu,<br>Al phosphor (7% by weight), and having the afterglow time of 30<br>ms | 40% by weight |
| Red emitting component phosphor<br>consisting of the same $(Zn, Mg)_3(PO_4)_2$:Mn phosphor (12% by<br>weight) as used in Example 32 and a short afterglow time<br>$Y_2O_2S$:Eu phosphor (8% by weight), and having the afterglow<br>time of 30 ms. | 20% by weight |

The screen of the obtained cathode-ray tube emitted white light under excitation by an electron beam and the chromaticity point of emission thereof did not change before or upon a lapse of 15 ms after interruption of the excitation.

Example 40

A black-and-white cathode-ray tube was produced in the same manner as described in Example 32 except that the fluorescent screen was formed of the blue, green and red component phosphors having the following characteristics and mixed with each other in the following ratio.

| | |
|---|---|
| Blue emitting component phosphor<br>consisting of the same ZnS:Ag, In, Cl phosphor as used in<br>Example 39 | 40% by weight |
| Green emitting component phosphor<br>consisting of a $Zn_2SiO_4$:Mn phosphor the 10% afterglow time of<br>which is 28 ms | 40% by weight |
| Red emitting component phosphor<br>consisting of $3Cd_3(PO_4)_2 \cdot CdCl_2$:Mn phosphor the 10% afterglow<br>time of which is 36 ms. | 20% by weight |

The screen of the obtained cathode-ray tube emitted white light having the same chromaticity point as that of the light emitted from the screen of Example 39 under excitation by an electron beam, and the chromaticity point hardly changed before or upon a lapse of 15 ms after interruption of the excitation.

Example 41

A black-and-white cathode-ray tube was produced in the same manner as described in Example 32 except that the fluorescent screen was formed of the blue, green and red component phosphors having the following characteristics and mixed with each other in the following ratio.

| Blue emitting component phosphor consisting of a ZnS:Ag, In, Cl phosphor with sulfur of the present invention wherein, | 37% by weight |
|---|---|
| the activating amount of Ag | $10^{-2}\%$ |
| the activating amount of In | $2\times10^{-3}\%$ |
| the activating amount of Cl | $10^{-4}\%$ |
| the sulfur content | $10^{-4}\%$ |
| 10% afterglow time | 30 ms |
| the main crystalline phase | cubic system |
| Green emitting component phosphor consisting of the same $Zn_2SiO_4$:Mn, As phosphor (34% by weight) as used in Example 32 and a short afterglow time ZnS:Cu, Al phosphor (8% by weight), and having the afterglow time of 30 ms | 42% by weight |
| Red emitting component phosphor consisting of the same $(Zn, Mg)_3(PO_4)_2$:Mn phosphor (13% by weight) as used in Example 32 and a short afterglow time $Y_2O_2S$:Eu phosphor (8% by weight), and having the afterglow time of 30 ms. | 21% by weight |

The screen of the obtained cathode-ray tube emitted white light having the same chromaticity point as that of the light emitted from the screen of Example 39 under excitation by an electron beam, and the chromaticity point hardly changed before or upon a lapse of 15 ms after interruption of the excitation. Further the luminance of emission of the former screen was 3% higher than that of the latter screen.

Example 42

A black-and-white cathode-ray tube was produced in the same manner as described in Example 32 except that the fluorescent screen was formed of the blue, green and red component phosphors having the following characteristics and mixed with each other in the following ratio.

| Blue emitting component phosphor consisting of a ZnS:Ag, In, Cu, Cl phosphor with sulfur of the present invention wherein, | 32% by weight |
|---|---|
| the activating amount of Ag | $10^{-2}\%$ |
| the activating amount of In | $2\times10^{-3}\%$ |
| the activating amount of Cu | $10^{-4}\%$ |
| the activating amount of Cl | $10^{-4}\%$ |
| the sulfur content | $10^{-4}\%$ |
| 10% afterglow time | 30 ms |
| the main crystalline phase | cubic system |
| Green emitting component phosphor consisting of the same $Zn_2SiO_4$:Mn, As phosphor (36% by weight) as used in Example 32 and a short afterglow time ZnS:Cu, Al phosphor (8% by weight), and having the afterglow time of 30 ms | 44% by weight |
| Red emitting component phosphor consisting of the same $(Zn, Mg)_3(PO_4)_2$:Mn phosphor (14% by weight) as used in Example 32 and a short afterglow time $Y_2O_2S$:Eu phosphor (10% by weight), and having the afterglow time of 30 ms. | 24% by weight |

**0 078 538**

The screen of the obtained cathode-ray tube emitted white light having the same chromaticity point as that of the light emitted from the screen of Example 39 under excitation by an electron beam, and the chromaticity point hardly changed before or upon a lapse of 15 ms after interruption of the excitation. Further the luminance of emission of the former screen was 7% higher than that of the latter screen.

Example 43

A black-and-white cathode-ray tube was produced in the same manner as described in Example 32 except that the fluorescent screen was formed of the blue, green and red component phosphors having the following characteristics and mixed with each other in the following ratio.

| | |
|---|---|
| Blue emitting component phosphor<br>consisting of a ZnS:Ag, In, Au, Cl phosphor with sulfur of the<br>present invention wherein, | 32% by weight |
| the activating amount of Ag | $10^{-2}$% |
| the activating amount of In | $2\times10^{-3}$% |
| the activating amount of Au | $10^{-3}$% |
| the activating amount of Cl | $10^{-4}$% |
| the sulfur content | $10^{-4}$% |
| 10% afterglow time | 30 ms |
| the main crystalline phase | cubic system |
| Green emitting component phosphor<br>consisting of the same $Zn_2SiO_4$:Mn, As phosphor (36% by<br>weight) as used in Example 32 and a short afterglow time ZnS:Cu,<br>Al phosphor (8% by weight), and having the afterglow time of 30<br>ms | 44% by weight |
| Red emitting component phosphor<br>consisting of the same $(Zn, Mg)_3(PO_4)_2$:Mn phosphor (14% by<br>weight) as used in Example 32 and a short afterglow time<br>$Y_2O_2S$:Eu phosphor (10% by weight), and having the afterglow<br>time of 30 ms. | 24% by weight |

The screen of the obtained cathode-ray tube emitted white light having the same chromaticity point as that of the light emitted from the screen of Example 39 under excitation by an electron beam, and the chromaticity point hardly changed before or upon a lapse of 15 ms after interruption of the excitation. Further the luminance of emission of the former screen was 7% higher than that of the latter screen.

**Claims**

1. A zinc sulfide blue emitting phosphor exhibiting long afterglow comprising zinc sulfide as the host material, silver as a first activator, at least one of gold and copper as a second activator, at least one of gallium and indium as a first co-activator and at least one element selected from the group consisting of chlorine, bromine, iodine, fluorine and aluminum as a second co-activator, the amounts of the first and second activators and the first and second co-activators being $5\times10^{-4}$ to $10^{-1}$%, 0 to $2\times10^{-2}$%, $10^{-6}$ to $10^{-1}$% and $5\times10^{-6}$ to $5\times10^{-2}$% by weight on the basis of the weight of the zinc sulfide host material, respectively.

2. A phosphor as defined in Claim 1 in which the amount of said first co-activator is $5\times10^{-6}$ to $10^{-2}$%.
3. A phosphor as defined in Claim 1 characterized by having a main crystalline phase of a cubic system.
4. A phosphor as defined in Claim 1 in which said second activator is copper and the amount thereof is $1.5\times10^{-4}$ to $8\times10^{-4}$%.

5. A zinc sulfide blue emitting phosphor exhibiting long afterglow comprising zinc sulfide as the host material, silver as a first activator, at least one of gold and copper as a second activator, at least one of gallium and indium as a first co-activator, at least one element selected from the group consisting of chlorine, bromine, iodine, fluorine and aluminium as a second co-activator, and sulfur, the amounts of the first and second activators, the first and second co-activators and sulfur being $5\times10^{-4}$ to

24

$10^{-1}$%, 0 to $2\times10^{-2}$%, $10^{-6}$ to $10^{-1}$%, $5\times10^{-6}$ to $5\times10^{-2}$%, and $10^{-5}$ to $8\times10^{-1}$% by weight on the basis of the weight of the zinc sulfide host material, respectively.

6. A phosphor as defined in Claim 5 in which the amount of said first co-activator is $5\times10^{-6}$ to $10^{-2}$%.

7. A phosphor as defined in Claim 5 in which the contents of sulfur is $5\times10^{-5}$ to $10^{-3}$%.

8. A phosphor as defined in Claim 5 characterized by having a main crystalline phase of a cubic system.

9. An electron excited fluorescent display device having at least as the major component of a blue emitting component phosphor of its fluorescent screen a zinc sulfide blue emitting phosphor exhibiting long afterglow comprising zinc sulfide as the host material, silver as a first activator, at least one of gold and copper as a second activator, at least one of gallium and indium as a first co-activator and at least one element selected from the group consisting of chlorine, bromine, iodine, fluorine and aluminum as a second activator, the amounts of the first and second activators and the first and second co-activators being $5\times10^{-4}$ to $10^{-1}$%, 0 to $2\times10^{-2}$%, $10^{-6}$ to $10^{-1}$% and $5\times10^{-6}$ to $5\times10^{-2}$% by weight on the basis of the weight of the zinc sulfide host material respectively.

10. A display device as defined in Claim 9 in which said zinc sulfide blue emitting phosphor further includes $10^{-5}$ to $8\times10^{-1}$% by weight of sulfur on the basis of the weight of the zinc sulfide host material.

11. A display device as defined in Claim 9 or 10 in which said screen further includes a green emitting component phosphor having the afterglow time of 5 to 150 ms and comprising a long afterglow green emitting phosphor the afterglow time of which is at least 5 ms, and a red emitting component phosphor having the afterglow time of 5 to 150 ms and comprising a long afterglow orange to red emitting phosphor the afterglow time of which is at least 5 ms, and the afterglow time of said blue emitting component phosphor is 5 to 150 ms.

12. A display device as defined in Claim 9 or 10 in which the amount of said first co-activator is $5\times10^{-6}$ to $10^{-2}$%.

13. A display device as defined in Claim 9 or 10 in which the zinc sulfide blue emitting phosphor has a main crystalline phase of a cubic system.

14. A display device as defined in Claim 11 in which said long afterglow green emitting phosphor is at least one phosphor selected from the group consisting of manganese activated zinc silicate phosphors ($Zn_2SiO_4$:Mn) and manganese arsenic activated zinc silicate phosphors ($Zn_2SiO_4$:Mn, As), and said long afterglow orange to red emitting phosphor is at least one phosphor selected from the group consisting of manganese activated zinc magnesium phosphate phosphors $(Zn, Mg)_3(PO_4)_2$:Mn manganese activated zinc phosphate phosphors $Zn_3(PO_4)_2$:Mn, manganese activated magnesium silicate phosphors ($MgSiO_3$:Mn), manganese and lead activated calcium silicate phosphors ($CaSiO_3$:Mn, Pb), manganese activated cadmium chlorophosphate phosphors $3Cd_3(PO_4)_2 \cdot CdCl_2$:Mn, europium and dysprosium activated rare earth oxide phosphor ($Ln_2O_3$:Eu, Dy wherein Ln is at least one element selected from the group consisting of Y, Gd, La and Lu), manganese activated potassium magnesium fluoride phosphor ($KMgF_3$:Mn), and manganese activated magnesium fluoride phosphors ($MgF_2$:Mn).

15. A display device as defined in Claim 11 in the form of a high resolution black-and-white cathode-ray tube having a fluorescent screen formed of white emitting phosphor obtained by mixing said blue, green and red emitting component phosphors in a proper mixing ratio.

16. A display device as defined in Claim 11 in the form of a high resolution power color cathode-ray tube the fluorescent screen of which is formed of a plurality of regularly arranged light emitting trios, each trio comprising a blue emitting element, green emitting element and red emitting element which are formed of said blue, green and red emitting component phosphors, respectively.

## Patentansprüche

1. Blau-emittierender Zinksulfid-Leuchtstoff mit langer Nachleuchtzeit, welcher umfaßt:

Zinksulfid als Grundmaterial, Silber als einen ersten Aktivator, mindestens eines der Elemente von Gold und Kupfer als einen zweiten Aktivator, mindestens eines der Elemente von Gallium un Indium als einen ersten Co-Aktivator und mindestens ein Element, das aus der Gruppe ausgewählt ist, die aus Chlor, Brom, Jod, Fluor und Aluminium besteht, als einen zweiten Co-Aktivator, wobei die Mengen der ersten und zweiten Aktivatoren und der ersten und zweiten Co-Aktivatoren $5\times10^{-4}$ bis $10^{-1}$%, 0 bis $2\times10^{-2}$%, $10^{-6}$ bis $10^{-1}$% bzw. $5\times10^{-6}$ bis $5\times10^{-2}$ Gew%, bezogen auf die Basis des Gewichtes des Zinksulfid-Grundmaterials, betragen.

2. Leuchtstoff nach Anspruch 1, in dem die Menge des ersten Co-Aktivators $5\times10^{-6}$ bis $10^{-2}$% beträgt.

3. Leuchtstoff nach Anspruch 1, gekennzeichnet durch das Aufweisen einer vorwiegend kristallinen Phase eines kubischen Systems.

4. Leuchtstoff nach Anspruch 1, in dem der zweite Aktivator Kupfer ist und dessen Menge $1,5\times10^{-4}$ bis $8\times10^{-4}$% beträgt.

5. Blau-emittierender Zinksulfid-Leuchtstoff mit langer Nachleuchtzeit, welcher umfaßt:

Zinksulfid als Grundmaterial, Silber als einen ersten Aktivator, mindestens eines der Elemente von Gold und Kupfer als einen zweiten Aktivator, mindestens eines der Elemente von Gallium und Indium als einen ersten Co-Aktivator, mindestens ein Element, das aus der Gruppe ausgewählt ist, die aus Chlor, Brom, Jod, Fluor und Aluminium besteht, als einen zweiten Co-Aktivator, und Schwefel, wobei die Mengen der ersten und zweiten Aktivatoren, der ersten und zweiten Co-Aktivatoren und Schwefel $5\times10^{-4}$ bis

$10^{-1}$%, 0 bis $2\times10^{-2}$%, $10^{-6}$ bis $10^{-1}$%, $5\times10^{-6}$ bis $5\times10^{-2}$% bzw. $10^{-5}$ bis $8\times10^{-1}$ Gew%, bezogen auf die Basis des Gewichts des Zinksulfid-Grundmaterials, betragen.

6. Leuchtstoff nach Anspruch 5, in dem die Menge des ersten Co-Aktivators $5\times10^{-6}$ bis $10^{-2}$% beträgt.

7. Leuchtstoff nach Anspruch 5, in dem der Gehalt an Schwefel $5\times10^{-5}$ bis $10^{-3}$% beträgt.

8. Leuchtstoff nach Anspruch 5, gekennzeichnet durch das Aufweisen einer vorwiegend kristallinen Phase eines kubischen Systems.

9. Durch Elektronen angeregte Fluoreszenz-Anzeigevorrichtung, die mindestens als die Hauptkomponente einer blau-emittierenden Leuchtstoffkomponente von ihrem Fluoreszenzschirm einen blau-emittierenden Zinksulfidleuchtstoff mit langer Nachleuchtzeit hat, der umfaßt:

Zinksulfid als Grundmaterial, Silber als einen ersten Aktivator, mindestens eines der Elemente von Gold und Kupfer als einen zweiten Aktivator, mindestens eines der Elemente von Gallium und Indium als einen ersten Co-Aktivator und mindestens ein Element, das aus der Gruppe ausgewählt ist, die aus Chlor, Brom, Jod, Fluor und Aluminium besteht, als einen zweiten Aktivator, wobei die Mengen der ersten und zweiten Aktivatoren und der ersten und zweiten Co-Aktivatoren $5\times10^{-4}$ bis $10^{-1}$%, 0 bis $2\times10^{-2}$%, $10^{-6}$ bis $10^{-1}$% bzw. $5\times10^{-6}$ bis $5\times10^{-2}$ Gew%, bezogen auf die Basis des Gewichts des Zinksulfid-Grundmaterials, betragen.

10. Anzeigevorrichtung nach Anspruch 9, in der der blau-emittierende Zinksulfidleuchtstoff weiterhin $10^{-5}$ bis $8\times10^{-1}$ Gew% Schwefel, bezogen auf die Basis des Gewichts des Zinksulfid-Grundmaterials, umfaßt.

11. Anzeigevorrichtung nach Anspruch 9 oder 10, in der der Schirm weiterhin eine grün-emittierende Leuchtstoffkomponente mit einer Nachleuchtzeit von 5 bis 150 ms umfaßt und einen grün-emittierenden Leuchtstoff mit langer Nachleuchtzeit, wobei seine Nachleuchtzeit mindestens 5 ms ist, und eine rot-emittierende Leuchtstoffkomponente mit der Nachleuchtzeit von 5 bis 150 ms und einen orange- bis rot-emittierenden Leuchtstoff mit langer Nachleuchtzeit, wobei dessen Nachleuchtzeit mindestens 5 ms beträgt und die Nachleuchtzeit der blau-emittierenden Phosphorkomponente 5 bis 150 ms beträgt.

12. Anzeigevorrichtung nach Anspruch 9 oder 10, in der die Menge des ersten Co-Aktivators $5\times10^{-6}$ bis $10^{-2}$% beträgt.

13. Anzeigevorrichtung nach Anspruch 9 oder 10, in der der blau-emittierende Zinksulfidleuchtstoff eine vorwiegend kristalline Phase eines kubischen Systems hat.

14. Anzeigevorrichtung nach Anspruch 11, in der der grün-emittierende Leuchtstoff mit langer Nachleuchtzeit mindestens ein Leuchtstoff ist, der aus der Gruppe ausgewählt ist, die besteht aus:

mit Mangan aktivierte Zinksilikat-Leuchtstoffe ($Zn_2SiO_4$:Mn) und mit Mangan, Arsen aktivierte Zinksilikat-Leuchtstoffe ($Zn_2SiO_4$:Mn, As), und dieser orange- bis rot-emittierende Leuchtstoff mit langer Nachleuchtzeit mindestens ein Leuchtstoff ist, der aus der Gruppe ausgewählt ist, die besteht aus:

mit Mangan aktivierte Zinkmagnesiumphosphat-Leuchtstoffe ($(Zn, Mg)_3(PO_4)_2$:Mn), mit Mangan aktivierte Zinkphosphat-Leuchtstoffe ($Zn_3(PO_4)_2$:Mn), mit Mangan aktivierte Magnesiumsilikat-Leuchtstoffe ($MgSiO_3$:Mn), mit Mangan und Blei aktivierte Kalziumsilikat-Leuchtstoffe ($CaSiO_3$:Mn, Pb), mit Mangan aktivierte Kadmiumchlorphosphat-Leuchtstoffe ($3Cd_3(PO_4)_2 \cdot CdCl_2$:Mn), mit Europium und Dysprosium aktivierte Leuchtstoffe aus Oxiden der seltenen Erden ($Ln_2O_3$:Eu, Dy), worin Ln mindestens ein Element ist, das aus der Gruppe ausgewählt ist, die aus Y, Gd, La und Lu besteht, mit Mangan aktivierter Kaliummagnesiumfluorid-Leuchtstoff ($KMgF_3$:Mn), und mit Mangan aktivierte Magnesiumfluorid-Leuchtstoffe ($MgF_2$:Mn).

15. Anzeigevorrichtung nach Anspruch 11 in Form eines Schwarz- und -weißkathodenstrahlrohres mit hoher Auflösung mit einem Fluoreszenzschirm, der aus weißemittierendem Leuchtstoff gebildet ist, der durch Vermischen der blau-, grün- und rot-emittierenden Leuchtstoff-Komponenten in einem genauen Mischungsverhältnis erhalten wurde.

16. Anzeigevorrichtung nach Anspruch 11 in Form eines Farb-Kathodenstrahlrohres mit hoher Auflösung, wobei dessen Fluoreszenzschirm aus einer Vielzahl von gleichmäßig angeordneten lichtemittierenden Trios gebildet ist, wobei jedes Trio ein blau-emittierendes Element, grün-emittierendes Element und rot-emittierendes Element umfaßt, die aus den blau- grün- bzw. rot-emittierenden Leuchtstoffkomponenten gebildet sind.

**Revendications**

1. Une matière luminescente ou phosphore à émission de lumière bleue, à base de sulfure de zinc présentant une luminescence rémanente de longue durée comprenant, du sulfure de zinc en tant que matière de support, de l'argent en tant que premier activateur, au moins l'un des métaux or et cuivre en tant que deuxième activateur, au moins l'un des métaux gallium et indium en tant que premier co-activateur et au moins un des éléments choisis dans le groupe comprenant chlore, brome, iode, fluor et aluminium en tant que second co-activateur, les quantités des premier et second activateurs et des premier et second co-activateurs étant respectivement de $5\times10^{-4}$ à $10^{-1}$%, 0 à $2\times10^{-2}$%, $10^{-6}$ à $10^{-1}$% et $5\times10^{-6}$ à $5\times10^{-2}$% exprimés en poids par rapport au poids du sulfure de zinc formant la matière de support.

2. Une matière luminescente ou phosphore telle que définie dans la revendication 1, dans laquelle la quantité du premier co-activateur est de $5\times10^{-6}$ à $10^{-2}$%.

**0 078 538**

3. Une matière luminescente ou phosphore telle que définie dans la revendication 1, caractérisée en ce qu'elle présente un phase cristalline principale appartenant au système cubique.

4. Une matière luminescente ou phosphore telle que définie dans la revendication 1, dans laquelle ledit second activateur est du cuivre et sa quantité est comprise entre $1,5\times10^{-4}$ et $8\times10^{-4}$%.

5. Une matière luminescente ou phosphore à émission de lumière bleue, à base de sulfure de zinc, comprenant du sulfure de zinc en tant que matière de support, de l'argent en tant que premier activateur, au moins l'un des métaux or ou cuivre en tant que second activateur, au moins l'un de métaux gallium et indium en tant que premier co-activateur et au moins un des éléments choisis dans le groupe comprenant le chlore, le brome, l'iode, le fluor et l'aluminium en tant que second co-activateur, ainsi que du soufre, les quantités du premier et du second activateur ainsi que du premier et du second co-activateur et du soufre étant respectivement de $5\times10^{-4}$ à $10^{-1}$%, 0 à $2\times10^{-2}$%, $10^{-6}$ à $10^{-1}$% et $5\times10^{-6}$ à $5\times10^{-2}$% exprimés en poids par rapport au poids du sulfure de zinc formant la matière de support, respectivement.

6. Une matière luminescente ou phosphore telle que définie dans la revendication 5, dans laquelle la quantité dudit premier co-activateur est de $5\times10^{-6}$ à $10^{-2}$%.

7. Une matière luminescente ou phosphore telle que définie dans la revendication 5, dans laquelle la teneur en soufre en de $5\times10^{-5}$ à $10^{-3}$%.

8. Une matière luminescente ou phosphore telle que définie dans la revendication 5, caractérisée en ce qu'elle présente une phase cristalline principale appartenant au système cubique.

9. Un dispositif d'affichage fluorescent excité par électrons comprenant au moins, en tant que constituant majeur d'une matière luminescente ou phosphore à émission de lumière bleue incorporée à son écran fluorescent, une matière luminescente ou phosphore à émission de lumière bleue à base de sulfure de zinc présentant une luminescence rémanente comprenant du sulfure de zinc en tant que matière de support, de l'argent en tant que premier activateur, au moins l'un des métaux or et cuivre en tant que deuxième activateur, au moins l'un des métaux gallium et indium en tant que premier co-activateur et au moins und des éléments choisis dans le groupe comprenant chlore, brome, iode, fluor et aluminium en tant que second co-activateur, les quantités des premier et second activateurs et des premier et second co-activateurs étant respectivement de $5\times10^{-4}$ à $10^{-1}$%, 0 à $2\times10^{-2}$%, $10^{-6}$ à $10^{-1}$% et $5\times10^{-6}$ à $5\times10^{-2}$% exprimés en poids par rapport au poids du sulfure de zinc formant la matière de support.

10. Un dispositif d'affichage tel que défini dans la revendication 9, dans lequel ladite matière luminescente ou phosphore à émission de lumière bleue à base de sulfure de zinc comprend, en outre, de $10^{-5}$ à $8\times10^{-1}$% en poids de soufre exprimés par rapport au poids du sulfure de zinc formant la matière de support.

11. Un dispositif d'affichage tel que défini dans la revendication 9 ou la revendication 10, dans lequel ledit écran comprend, en outre, une matière luminescente ou phosphore à émission de lumière verte présentant une luminescence rémanente de 5 à 150 ms et comprenant une matière luminescente ou phosphore à émission de bleu présentant une luminescence rémanente qui est au moins égale à 5 ms et une matière luminescente de phosphore à émission de lumière rouge présentant une luminescente rémanente de 5 à 150 ms et comprenant également une matière luminescente ou phosphore à émission de lumière orange à rouge présentant une luminescence rémanente d'au moins 5 ms, la durée de la rémanence luminescente de ladite matière luminescente à émission de lumière bleue étant de 5 à 150 ms.

12. Un dispositif d'affichage tel que défini dans la revendication 9 ou 10, dans lequel la quantité dudit premier co-activateur est de $5\times10^{-6}$ à $10^{-2}$%.

13. Un dispositif d'affichage tel que défini dans la revendication 9 ou 10, dans lequel ladite matière luminescente ou phosphore à émission de lumière bleue à base de sulfure de zinc présente une phase cristalline principale appartenant au système cubique.

14. Un dispositif d'affichage tel que défini dans la revendication 11, dans lequel ladite matière luminescente ou phosphore à émission de lumière verte a luminescence rémanente longue est au moins un phosphore choisi dans le groupe comprenant les phosphores à base de silicate de zinc activés par le manganèse ($Zn_2SiO_4$:Mn) et les phosphores à base de silicate de zinc activés par l'arsenic et le manganèse ($Zn_2SiO_4$:Mn, As) et le phosphore à émission de lumière orange à rouge à luminescence rémanente longue est au moins un phosphore choisi dans le groupe comprenant les phosphores à base de phosphate de magnésium et de zinc activés par le manganèse ($(Zn, Mg)_3(PO_4)_2$:Mn, les phosphores à base de phosphate de zinc activés par le manganèse $Zn_3(PO_4)_2$:Mn, les phosphores à base de silicate de magnésium activés par le manganèse ($MgSiO_3$:Mn), les phosphores à base de silicate de calcium activés par le manganèse et le plomb ($CaSiO_3$:Mn, Pb), les phosphores à base de chlorophosphates de cadmium activés par le manganèse $3Cd_3(PO_4)_2 \cdot CdCl_2$:Mn, les phosphores à base d'oxyde de terres rares activés par le dysprosium et l'europium ($Ln_2O_3$:Eu, Dy) dans lequel Ln est au moins un élément choisi dans le groupe comprenant Y, Gd, La et Lu), le phosphore à base de fluorure de magnésium et de potassium activés par le manganèse ($KMgF_3$:Mn) et les phosphores à base de fluorure de magnésium activés par le manganèse ($MgF_2$:Mn).

15. Un dispositif d'affichage tel que défini dans la revendication 11, sous la forme d'un tube à rayon cathodique blanc et bleu à forte résolution, présentant un écran fluorescent formé de phosphore à émission de lumière blanche et obtenu par mélange desdits phosphores à émission de lumière bleue, verte et rouge, selon un rapport conenable.

16. Un dispositif d'affichage tel que décrit dans la revendication 11, sous la forme d'un tube à rayon

27

cathodique couleur, à haut pouvoir de résolution, dont l'écran fluorescent est formé d'une pluralité de trios à émission de lumière disposés régulièrement, chaque trio comprenant un élément émettant une lumière bleue, un élément émettant une lumière verte et un élément émettant une lumière rouge, lesdits éléments étant formés desdits phosphores à émission de lumière bleue, verte et rouge, respectivement.

# F I G . I

RESPECTIVE LUMINANCE (%) vs (n m)

# F I G . 2

RESPECTIVE LUMINANCE (%) vs (n m)

1

0 078 538

F I G.3

F I G.4

2

# F I G.5

# F I G.6

3

**0 078 538**

F I G.7

RESPECTIVE LUMINANCE (%)

100

50

a
b
c

400    500    600    700
(n m)

F I G.8

RESPECTIVE LUMINANCE (%)

400

300

200

100

0

a

b

$10^{-4}$    $10^{-3}$    $10^{-2}$
ACTIVATING AMOUNT (% BY WEIGHT)

4

FIG.9

FIG.10

0 078 538

5

0 078 538

F I G.11

RESPECTIVE LUMINANCE (%)

Ga (% BY WEIGHT)

F I G.12

RESPECTIVE LUMINANCE (%)

In (% BY WEIGHT)

6

# F I G . 13

# F I G . 14

F I G .15

F I G .16

# F I G .17